# EUROPÄISCHE PATENTSCHRIFT

(11) **EP 2 475 278 B1**
(45) Veröffentlichungstag und Bekanntmachung des Hinweises auf die Patenterteilung: **12.04.2017**
(21) Anmeldenummer: 10760590.9
(22) Anmeldetag: 08.09.2010
(51) Int. Cl.: H01F 7/02

(54) **VERSCHLUSSVORRICHTUNG**
CLOSING DEVICE
DISPOSITIF DE FERMETURE

(30) Priorität: 08.09.2009 DE 102009040463
(43) Veröffentlichungstag der Anmeldung: 18.07.2012
(73) Patentinhaber: Fidlock GmbH, 30175 Hannover (DE)
(72) Erfinder: FIEDLER, Joachim, 30175 Hannover (DE)
(74) Vertreter: Maikowski & Ninnemann Patentanwälte Partnerschaft mbB
(86) Internationale Anmeldenummer: PCT/EP2010/005505
(87) Internationale Veröffentlichungsnummer: WO 2011/029583

(56) Entgegenhaltungen:
- WO-A2-2008/006355
- WO-A2-2009/006888
- DE-U1-202004 011 353
- FR-A- 1 351 339
- US-B1- 7 389 750

## Beschreibung

Die Erfindung betrifft eine Verschlussvorrichtung nach dem Oberbegriff des Anspruchs 1.

Eine derartige Verschlussvorrichtung umfasst
- ein erstes Verschlussteil,
- ein zweites Verschlussteil, das in eine Befestigungsrichtung an dem ersten Verschlussteil angeordnet werden kann und in einem Schließzustand mit dem ersten Verschlussteil verbunden ist, und
- ein Betätigungselement, an dem das zweite Verschlussteil beweglich angeordnet ist.

Derartige Verschlussvorrichtungen sind insbesondere überall da anwendbar, wo zwei Teile lösbar miteinander verbunden werden sollen. Beispielsweise eignet sich eine derartige Verschlussvorrichtung als Verschluss für eine Tasche oder einen anderen Behälter, als Haltevorrichtung oder als Verbindungsvorrichtung zur Verbindung zweier auf Zug belasteter Elemente, beispielsweise zweier Zugseile oder Gurte. In konkreter Anwendung ist eine solche Verschlussvorrichtung beispielsweise zur Kopplung einer Leine mit einem Halsband für Haustiere einsetzbar.

Denkbar ist auch eine Anwendung bei auf Druck belasteten Elementen.
Bei der Verschlussvorrichtung ist in dem Schließzustand das zweite Verschlussteil über das Betätigungselement an dem ersten Verschlussteil gehalten. Dazu wirkt das zweite Verschlussteil derart mit dem Betätigungselement zusammen, dass in einem belasteten Zustand bei einer auf das zweite Verschlussteil relativ zum ersten Verschlussteil entlang der Befestigungsrichtung wirkenden Kraft das Betätigungselement fest mit dem ersten Verschlussteil verbunden ist und das zweite Verschlussteil an dem ersten Verschlussteil hält. Mit anderen Worten ist das zweite Verschlussteil nicht direkt an dem ersten Verschlussteil befestigt, sondern wird mittelbar über das Betätigungselement an dem ersten Verschlussteil gehalten. Wird das zweite Verschlussteil auf Druck oder Zug belastet, wirkt das zweite Verschlussteil auf das Betätigungselement ein und sperrt das Betätigungselement derart, dass das Betätigungselement nicht ohne weiteres von dem ersten Verschlussteil gelöst werden kann und damit die Verschlussvorrichtung gesperrt ist. In belastetem Zustand sind das erste Verschlussteil und das zweite Verschlussteil auf diese Weise über das Betätigungselement fest miteinander verbunden.

In einem entlasteten Zustand hingegen, in dem keine oder nur eine geringe Kraft auf das zweite Verschlussteil relativ zum ersten Verschlussteil wirkt, ist die Verschlussvorrichtung nicht gesperrt, und das zweite Verschlussteil ist durch Betätigen des Betätigungselementes von dem ersten Verschlussteil lösbar.

Herkömmlich wird beispielsweise zur Kopplung einer Hundeleine mit einem Hundehalsband ein Karabiner verwendet, der an der Hundeleine angeordnet ist und in einen Befestigungsbügel am Hundehalsband eingreift. Solche Karabiner werden auch zum Verbinden zweier Zugseile verwendet und können grundsätzlich große Zugkräfte übertragen. Insbesondere bei Verwendung an einer Hundeleine können herkömmliche Karabiner aber schwer und gegebenenfalls unhandlich zu handhaben sein.

Bei einer aus der DE 20 2004 011 353 U1 bekannten Verschlussvorrichtung zur Verbindung einer Leine mit einem Halsband ist ein in das Halsband integriertes Anschlusselement vorgesehen, das mit einem an einem Befestigungselement an einer Leine vorgesehenen Gegenelement zum Ausbilden einer lösbaren Schnellkopplung zusammenwirkt. Das Gegenelement ist dabei aus zwei elastisch verformbaren Halbschalen gebildet, die zusammen eine Kugel ausbilden und in eine Kugelaufnahme am Halsband rastend eingesteckt werden können. Durch Verschieben einer als Betätigungselement dienenden Hülse werden die Halbschalen dann elastisch so verformt, dass sich die Verrastung mit der Kugelaufnahme löst und das Gegenelement vom Halsband entnommen und auf diese Weise die Leine vom Halsband gelöst werden kann.

Aus der US 7,389,750 B1 ist eine Verschlussvorrichtung bekannt, bei der ein zweites Verschlussteil in Form eines "Male Subassembly" in einem Schließzustand rastend mit einem ersten Verschlussteil in Form eines "Female Subassembly" rastend verbunden ist. Die Rastverbindung wird hierbei über Kugeln hergestellt und kann durch Betätigung eines Betätigungselements gelöst werden. Das Betätigungselement ist dabei sowohl in belastetem als auch im entlasteten Zustand beweglich, so dass sowohl im belasteten als auch im entlasteten Zustand die rastende Verbindung lösbar ist.

Aus der FR 1.351.339 B ist eine Verschlussvorrichtung bekannt, bei der ein erstes Verschlussteil rastend mit einem zweiten Verschlussteil verbunden ist, indem ein Rastelement des zweiten Verschlussteils in einem Schließzustand in eine Aussparung des ersten Verschlussteils eingreift.

Die WO 2008/006355 A2 offenbart eine Verschlussvorrichtung, bei der ein erstes Verschlussteil und ein zweites Verschlussteil in einer Schließstellung rastend miteinander verbunden sind. Ein Betätigungselement, an dem das zweite Verschlussteil beweglich angeordnet ist und über das die Verbindung zwischen dem zweiten Verschlussteil und dem ersten Verschlussteil hergestellt wird, ist dabei nicht vorgesehen.

Eine andere Verschluissvorrichtung, bei der ein erstes Verschlussteil und ein zweites Verschlussteil in einer Schließstellung rastend miteinander verbunden sind, offenbart die WO 2009/006888 A2.

Aufgabe der vorliegenden Erfindung ist es, eine Verschlussvorrichtung zur Verfügung zu stellen, die auf einfache und haptisch angenehme Weise betätigt werden kann und gleichzeitig eine feste, im belasteten Zustand nicht in unbeabsichtigter Weise lösbare Verbindung zweier Verschlussteile schafft. Insbesondere soll die Verschlussvorrichtung auf einfache und haptisch angenehme Weise verschließbar sein.

Diese Aufgabe wird durch einen Gegenstand mit den Merkmalen des Anspruchs 1 gelöst.

Demnach sind bei einer Verschlussvorrichtung der eingangs genannten Art magnetische Mittel zum Erzeugen einer Anziehungskraft zwischen dem ersten Verschlussteil einerseits und dem Betätigungselement und/oder dem zweiten Verschlussteil andererseits vorgesehen, um das Überführen der Verschlussvorrichtung in den Schließzustand zu unterstützen.

Zum Ausbilden der magnetischen Mittel können an dem ersten Verschlussteil und dem Betätigungselement jeweils ein Magnet oder einerseits ein Magnet und andererseits ein Anker aus einem ferromagnetischen Werkstoff angeordnet sein. Sind an dem ersten Verschlussteil und dem Betätigungselement jeweils ein Magnet angeordnet, so sind die Magnete derart gepolt, dass sie sich gegenseitig anziehen und damit eine magnetische Anziehungskraft zwischen erstem Verschlussteil und Betätigungselement erzeugen.

Anstelle eines der Magneten kann auch an einem der Teile, nämlich am Betätigungselement oder am ersten Verschlussteil, ein passiver ferromagnetischer Anker verwendet werden, der selbst keine magnetischen Felder erzeugt, aber durch einen Magneten am anderen der Teile angezogen wird.

Statt am Betätigungselement einen Magneten oder Anker anzuordnen, kann auch an dem zweiten Verschlussteil ein Magnet oder Anker vorgesehen sein. Die magnetische Anziehungskraft wird dann zwischen erstem Verschlussteil und zweitem Verschlussteil erzeugt, wobei das Betätigungselement derart mit dem zweiten Verschlussteil gekoppelt ist, dass es unter Wirkung der magnetischen Anziehungskraft zusammen mit dem zweiten Verschlussteil in den Schließzustand gebracht wird.

Die magnetischen Mittel dienen dazu, das Herstellen des Schließzustands der Verschlussvorrichtung zu unterstützen, so dass sich die Verschlussvorrichtung in einfacher und für einen Nutzer haptisch angenehmer Weise schließt, wenn die beiden miteinander zu verbindenden Verschlussteile einander angenähert werden. In vorteilhafter Ausgestaltung erfolgt das Herstellen des Schließzustands durch Wirkung der magnetischen Anziehungskraft weitestgehend selbsttätig, so dass ein Nutzer die zu verbindenden Verschlussteile nur einander anzunähern braucht, nicht aber sicherstellen muss, dass das zweite Verschlussteil und das Betätigungselement zum Herstellen des Schließzustands in gewünschter Weise mit dem ersten Verschlussteil in Eingriff gelangen. Letzteres erfolgt unter Wirkung der magnetischen Mittel oder wird durch diese zumindest unterstützt.

An jedem der Teile kann auch mehr als ein Magnet angeordnet sein, beispielsweise jeweils ein aus zwei Magneten gebildetes Magnetpaar.

Das Betätigungselement kann zum Herstellen des Schließzustands zusammen mit dem zweiten Verschlussteil beispielsweise in die Befestigungsrichtung in eine Aussparung (beispielsweise eine Bohrung) des ersten Verschlussteils einsteckbar und zum Lösen entgegen der Befestigungsrichtung aus der Aussparung entnehmbar sein. Zum Schließen der Verschlussvorrichtung wird das Betätigungselement zusammen mit dem zweiten Verschlussteil in Befestigungsrichtung in die Aussparung des ersten Verschlussteils eingesetzt und mit dem ersten Verschlussteil verbunden. Zum Lösen der Verschlussvorrichtung kann das Betätigungselement dann entgegen der Befestigungsrichtung aus der Aussparung entnommen werden, wobei hierzu die Verbindung zwischen Betätigungselement und erstem Verschlussteil in entlastetem Zustand des zweiten Verschlussteils gelöst wird.

Das zweite Verschlussteil kann beispielsweise entlang der Befestigungsrichtung verschieblich an dem Betätigungselement angeordnet sein. Hierzu ist das zweite Verschlussteil beispielsweise über mindestens eine Führungsöffnung verschieblich an dem Betätigungselement gelagert, wobei bei Belastung des zweiten Verschlussteils das zweite Verschlussteil relativ zum Betätigungselement zum Sperren der Verbindung des Betätigungselementes mit dem ersten Verschlussteil um zumindest eine geringe Wegstrecke verstellt werden kann.

Zusätzlich kann vorgesehen sein, dass das Betätigungselement zum Lösen der Verbindung relativ zum ersten Verschlussteil verdrehbar oder verschiebbar ist, um die durch die magnetischen Mittel erzeugte magnetische Anziehungskraft zum Öffnen der Verschlussvorrichtung abzuschwächen. Diesem liegt der Erkenntnis zugrunde, dass beim Öffnen der Verschlussvorrichtung die magnetische Anziehungskraft überwunden werden muss, um das Betätigungselement zusammen mit dem zweiten Verschlussteil von dem ersten Verschlussteil entnehmen zu können, also beispielsweise entgegen der Befestigungsrichtung aus der Aussparung am ersten Verschlussteil zu entfernen. Dadurch, dass das Betätigungselement quer zur Befestigungsrichtung verdreht oder verschoben wird, können die sich anziehenden Magnete oder Anker in Querrichtung voneinander entfernt werden, bis sie sich nicht mehr oder nur noch abgeschwächt anziehend gegenüber stehen. Bei Verwendung mehrerer Magnete an jedem Teil (an erstem Verschlussteil einerseits und an zweitem Verschlussteil und/oder Betätigungselement andererseits) und geeigneter Wahl der Polung der Magnete kann durch Verdrehen oder Verschieben des Betätigungselementes die Magnetkraft auch umgedreht werden, so dass sich die Magnete zum Öffnen abstoßend gegenüber stehen und damit das Öffnen unterstützen.

In einer Ausführungsform einer Verschlussvorrichtung kann in dem Schließzustand in dem belasteten Zustand das Betätigungselement reibschlüssig durch Haftreibung an dem ersten Verschlussteil gehalten sein. Im belasteten Zustand wirkt das zweite Verschlussteil dann derart auf das Betätigungselement ein, dass dieses in Reibschluss mit dem ersten Verschlussteil gelangt und nicht ohne weiteres vom ersten Verschlussteil gelöst werden kann. Das zweite Verschlussteil kann hierzu beispielsweise einen Sperrabschnitt mit mindestens einer Auflaufschräge aufweisen, die bei einer auf das zweite Verschlussteil relativ zum ersten Verschlussteil entlang der Befestigungsrichtung wirkenden Zug- oder Druckkraft auf eine Auflaufschräge an einem Abschnitt des Betätigungselements aufläuft, so dass der Sperrabschnitt den Abschnitt des Betätigungselements reibschlüssig nach Art einer Selbsthemmung mit dem ersten Verschlussteil verbindet.

In einer alternativen Ausgestaltung kann das zweite Verschlussteil auch einen Sperrabschnitt aufweisen, der das zweite Verschlussteil und das Betätigungselement insbesondere einstückig derart miteinander verbindet, dass bei einer auf das zweite Verschlussteil wirkenden Kraft der Sperrabschnitt auf einen Abschnitt des Betätigungselements einwirkt, so dass der Sperrabschnitt den Abschnitt des Betätigungselements reibschlüssig mit dem ersten Verschlussteil verbindet.

Bei dieser Ausgestaltung sind das Verschlussteil und das Betätigungselement direkt beispielsweise einstückig oder über einen Hebel gelenkig miteinander verbunden, wobei das Betätigungselement und das Verschlussteil zumindest um eine kleine Wegstrecke relativ zueinander beweglich sind, indem der Sperrabschnitt und auch der Abschnitt des Betätigungselements, auf den der Sperrabschnitt einwirkt, zumindest abschnittsweise federelastisch ausgebildet sind. Wirkt eine Kraft auf das zweite Verschlussteil entgegen der Befestigungsrichtung ein, so drückt der das zweite Verschlussteil mit dem Betätigungselement verbindende Sperrabschnitt den Abschnitt des Betätigungselements in reibschlüssige Anlage mit dem ersten Verschlussteil, so dass das Betätigungselement reibschlüssig nach Art einer Selbsthemmung an dem ersten Verschlussteil gehalten ist. Bei dieser Ausführungsform wird auch in dem entlasteten Zustand das Betätigungselement durch Haftreibung an dem ersten Verschlussteil gehalten, so dass auch in entlastetem Zustand das Betätigungselement nicht ohne weiteres von dem ersten Verschlussteil rutschen kann. Gleichwohl kann in entlastetem Zustand die Verschlussvorrichtung in einfacher Weise geöffnet werden, indem das Betätigungselement von dem ersten Verschlussteil gezogen wird, wobei hierzu die zwischen erstem Verschlussteil und Betätigungselement wirkende Haftreibung und zusätzlich die magnetische Anziehungskraft überwunden werden muss.

Alternativ ist auch denkbar, dass in dem entlasteten Zustand das Betätigungselement durch die magnetischen Mittel an dem ersten Verschlussteil gehalten wird und im entlasteten Zustand keine oder nur eine sehr geringe Haftreibung zwischen ersten Verschlussteil wirkt.

Bei der Verschlussvorrichtung wird das zweite Verschlussteil in dem Schließzustand über das Betätigungselement an dem ersten Verschlussteil gehalten und damit eine Verbindung zwischen dem ersten Verschlussteil und dem zweiten Verschlussteil hergestellt. Die Verbindung zwischen dem Betätigungselement und dem ersten Verschlussteil kann in einer Ausführungsform rastend ausgebildet sein und stellt in diesem Fall eine Rastverbindung dar, im Rahmen derer das Betätigungselement formschlüssig an dem ersten Verschlussteil gehalten wird. Das zweite Verschlussteil, das beweglich an dem Betätigungselement angeordnet ist, wirkt dabei derart mit dem Betätigungselement zusammen, dass im belasteten Zustand, also bei Angreifen einer Kraft an dem zweiten Verschlussteil, die formschlüssige Verbindung des Betätigungselements mit dem ersten Verschlussteil gesperrt ist und nicht gelöst werden kann. In belastetem Zustand ist die Verbindung damit unlösbar, so dass auch große Kräfte zwischen dem ersten Verschlussteil und dem zweiten Verschlussteil durch die Verschlussvorrichtung sicher aufgenommen werden können und ein unbeabsichtigtes Lösen ausgeschlossen ist.

In dem entlasteten Zustand hingegen, in dem keine oder nur geringe Kräfte auf das zweite Verschlussteil einwirken, ist die Verschlussvorrichtung nicht gesperrt. Mit anderen Worten besteht zwar die Rastverbindung des Betätigungselementes mit dem ersten Verschlussteil in dem entlasteten Zustand grundsätzlich fort, kann aber gelöst werden, um das erste Verschlussteil von dem zweiten Verschlussteil zu trennen und die Verschlussvorrichtung zu öffnen. Im entlasteten Zustand ist die Verschlussvorrichtung somit lösbar, die Rastverbindung zwischen Betätigungselement und erstem Verschlussteil kann aufgehoben werden, und das Betätigungselement kann zusammen mit dem zweiten Verschlussteil von dem ersten Verschlussteil entnommen werden.

Das Betätigungselement weist zum Herstellen der Rastverbindung mit dem ersten Verschlussteil vorteilhafterweise mindestens ein Rastelement auf, das in dem Schließzustand formschlüssig mit einem Rastabschnitt, beispielsweise einer Rastöffnung, am ersten Verschlussteil in Eingriff steht. Die rastende Verbindung des Betätigungselementes mit dem ersten Verschlussteil ist damit formschlüssig und wird über geeignete Rastelemente hergestellt, die eine auf das zweite Verschlussteil wirkende Kraft über das Betätigungselement in das erste Verschlussteil einleiten und die Verbindung des zweiten Verschlussteils mit dem ersten Verschlussteil herstellen.

Das zweite Verschlussteil kann vorteilhafterweise einen Sperrabschnitt aufweisen, der in dem belasteten Zustand bei einer auf das zweite Verschlussteil wirkenden Kraft mit dem mindestens einen Rastelement des Betätigungselementes zum Sperren der rastenden Verbindung des Betätigungselementes mit dem ersten Verschlussteil zusammenwirkt.

Unterschiedliche Ausgestaltungen eines derartigen Sperrabschnitts sind denkbar und vorteilhaft.

In einer ersten Variante kann der Sperrabschnitt mindestens eine Auflaufschräge aufweisen, die bei einer auf das zweite Verschlussteil wirkenden Kraft auf das Rastelement derart aufläuft, dass das mindestens eine Rastelement nicht von dem Rastabschnitt lösbar ist. Dabei kann das mindestens eine Rastelement ebenfalls eine Auflaufschräge aufweisen. Durch das Auflaufen des Sperrabschnitts auf das Rastelement wird das Rastelement in Eingriff mit dem Rastabschnitt gedrückt, so dass ein Entfernen des Rastelementes von dem Rastabschnitt, also beispielsweise aus der Rastöffnung, nicht möglich ist. Der Sperrabschnitt wirkt damit einem Lösen des Rastelementes von dem Rastabschnitt entgegen.

Der Sperrabschnitt kann beispielsweise konisch ausgebildet sein und in einer konischen Aussparung des Betätigungselementes angeordnet sein, wobei die konische Mantelfläche des Sperrabschnitts auf entsprechend angeschrägte Auflaufschrägen eines oder mehrerer Rastelemente aufläuft, um die Rastverbindung zwischen Betätigungselement und erstem Verschlussteil zu sperren.

In einer zweiten Variante kann der Sperrabschnitt bei einer auf das zweite Verschlussteil wirkenden Kraft mit einem Aufnahmeabschnitt des mindestens einen Rastelementes derart in Eingriff gelangen, dass das mindestens eine Rastelement nicht von dem Rastabschnitt lösbar ist. Bei dieser zweiten Variante werden keine Auflaufschrägen verwendet, sondern der Sperrabschnitt greift als Formteil in einen entsprechend geformten Aufnahmeabschnitt des mindestens einen Rastelementes ein. Der Sperrabschnitt kann hierzu beispielsweise zylindrisch ausgebildet sein, wobei bei Eingriff des Sperrabschnitts in den Aufnahmeabschnitt an dem Rastelement das Rastelement derart gesperrt ist, dass es nicht außer Eingriff mit dem Rastabschnitt gebracht werden kann. Der Sperrabschnitt dient damit als Sperre, die einer Bewegung des Rastelementes von dem Rastabschnitt entgegenwirkt.

Ein Vorteil der Ausführungsform mit Auslaufschräge liegt darin, dass der Anpressdruck, der beim Auflaufen des Sperrabschnitts auf das mindestens eine Rastelement des Betätigungselements entsteht, dazu genutzt werden kann, eine weitere Bewegung des Betätigungselements zu verhindern, insbesondere indem das Betätigungselement durch Wirkung des Anpressdrucks reibschlüssig oder formschlüssig so mit dem ersten Verschlussteil zusammenwirkt, dass eine Bewegung tangential oder quer zur Befestigungsrichtung verhindert ist.

Ein Vorteil der Ausführungsform ohne Auflaufschräge liegt darin, dass der Weg, den das zweite Verschlussteil vom entsperrten in den gesperrte Zustand zurücklegt, sehr kurz sein kann.

In einer dritten Variante kann der Sperrabschnitt das zweite Verschlussteil und das Betätigungselement insbesondere einstückig derart miteinander verbinden, dass bei einer auf das zweite Verschlussteil wirkenden Kraft der Sperrabschnitt derart auf einen Abschnitt des Betätigungselements einwirkt, dass das mindestens eine Rastelement nicht von dem Rastabschnitt lösbar ist. Das Betätigungselement und das zweite Verschlussteil sind somit direkt miteinander verbunden, dabei aber relativ zueinander zumindest um eine kleine Wegstrecke beweglich, wobei bei einer Kraftwirkung auf das zweite Verschlussteil entgegen der Befestigungsrichtung das Rastelement durch Einwirken des zumindest abschnittsweise elastisch ausgebildeten Sperrabschnitts in Eingriff mit dem Rastabschnitt gedrückt wird, so dass das Rastelement nicht von dem Rastabschnitt gelöst werden kann.

Im entlasteten Zustand, in dem keine Kraft auf das zweite Verschlussteil einwirkt, ist die Rastverbindung zwischen dem Betätigungselement und dem ersten Verschlussteil lösbar. Zum Lösen der formschlüssigen Rastverbindung zwischen dem mindestens einen Rastelement des Betätigungselementes und dem Rastabschnitt des ersten Verschlussteils kann vorgesehen sein, dass durch Aufbringen einer Druckkraft auf das mindestens eine Rastelement und Entfernen des mindestens einen Rastelements von dem Rastabschnitt die Verbindung lösbar ist. Die Druckkraft kann beispielsweise in einer Richtung senkrecht zur Befestigungsrichtung auf die Rastelemente wirken und die Rastelemente derart außer Eingriff mit dem Rastabschnitt drücken, dass das Betätigungselement zusammen mit dem zweiten Verschlussteil entgegen der Befestigungsrichtung aus der Aussparung des ersten Verschlussteils gezogen werden kann.

Alternativ kann auch vorgesehen sein, dass im entlasteten Zustand die formschlüssige Verbindung zwischen dem mindestens einen Rastelement des Betätigungselementes und dem Rastabschnitt des ersten Verschlussteils durch Aufbringen einer Zugkraft auf das Betätigungselement entgegen der Befestigungsrichtung gelöst werden kann. Im entlasteten Zustand kann dann durch Zug an dem Betätigungselement das Betätigungselement in einfacher Weise aus der Aussparung des ersten Verschlussteils gezogen werden, ohne dass die Rastelemente in gesonderter Weise betätigt werden müssen. Hierzu kann das mindestens eine Rastelement oder der Rastabschnitt beispielsweise eine Schräge oder Rundung aufweisen, die derart ausgebildet ist, dass bei einer entgegen der Befestigungsrichtung auf das Betätigungselement wirkenden Zugkraft die Schräge auf den Rastabschnitt aufläuft und dadurch das Rastelement zum Lösen der formschlüssigen Verbindung außer Eingriff mit dem Rastabschnitt gebracht wird.

Dadurch, dass das Rastelement eine entgegen der Befestigungsrichtung gerichtete Schräge oder Rundung aufweist, die bei Zug an dem Betätigungselement auf den Rastabschnitt, beispielsweise den Rand einer Rastöffnung, aufläuft, wird beim Zug an dem Betätigungselement das Rastelement außer Eingriff mit dem Rastabschnitt gedrückt und damit die Verbindung gelöst. Dies ist möglich, weil in dem entlasteten Zustand, also wenn keine Kraft auf das zweite Verschlussteil wirkt, das Rastelement nicht gesperrt ist und außer Eingriff mit dem Rastabschnitt gebracht werden kann. Während in belastetem Zustand das Rastelement an dem Rastabschnitt formschlüssig gehalten wird, kann das Rastelement in entlastetem Zustand mit seiner Schräge auf den Rastabschnitt auflaufen und wird dadurch außer Eingriff mit dem Rastabschnitt gedrückt, so dass die Rastverbindung zwischen Betätigungselement und erstem Verschlussteil gelöst und das zweite Verschlussteil zusammen mit dem Betätigungselement aus dem ersten Verschlussteil entnommen werden kann.

Wiederum alternativ ist es auch möglich, dass in dem entlasteten Zustand die formschlüssige Verbindung zwischen dem mindestens einen Rastelement des Betätigungselementes und dem Rastabschnitt des ersten Verschlussteils durch Verdrehen des Betätigungselementes um die Befestigungsrichtung relativ zum ersten Verschlussteil oder durch Verschieben des Betätigungselementes quer zur Befestigungsrichtung lösbar ist. Diesem liegt der Gedanke zugrunde, dass das Rastelement in belastetem Zustand durch Einwirken des zweiten Verschlussteils fest an dem Rastabschnitt gehalten wird, in entlastetem Zustand aber relativ zum Rastabschnitt derart verdreht oder verschoben werden kann, dass das Rastelement nicht entgegen der Befestigungsrichtung außer Eingriff mit dem Rastabschnitt gelangt, sondern auf einem anderen Wege, nämlich quer zur Befestigungsrichtung.

Beispielsweise kann das Rastelement durch Verdrehen oder Verschieben des Betätigungselementes aus dem Bereich des Rastabschnitts entfernt werden, so dass der formschlüssige Eingriff des Rastelements mit dem Rastabschnitt aufgehoben wird. Ebenso ist möglich, dass während des Verdrehens oder Verschiebens des Betätigungselementes das Rastelement durch eine geeignete Schräge an dem Rastelement und/oder im Bereich des Rastabschnitts außer Eingriff mit dem Rastabschnitt gedrückt wird, so dass auf diese Weise die formschlüssige Verbindung des Rastelements mit dem Rastabschnitt aufgehoben wird. Weiterhin ist auch möglich, dass der Rastabschnitt als Gewinde ausgebildet ist, das derart mit dem mindestens einen Rastelement zusammenwirkt, dass das Betätigungselement durch Verdrehen aus dem ersten Verschlussteil geschraubt wird.

Das Verdrehen und Verschieben erfolgt hierbei jeweils in eine Richtung senkrecht zur Befestigungsrichtung und bewirkt eine Relativbewegung zwischen dem Rastelement des Betätigungselementes und dem Rastabschnitt am ersten Verschlussteil, in Folge derer Rastelement und Rastabschnitt außer Eingriff gelangen und das Betätigungselement zusammen mit dem zweiten Verschlussteil in anderer Art und Weise von dem ersten Verschlussteil gelöst werden kann, als es beim Schließen verrastet.

Bei sämtlichen vorangehend geschilderten Ausführungsformen können Rückstellmittel zum Überführen des zweiten Verschlussteils in eine entsperrte Position relativ zu dem Betätigungselement in dem entlasteten Zustand vorgesehen sein. Die Rückstellmittel können dabei beispielsweise mechanisch durch eine Feder oder magnetisch ausgebildet sein und wirken derart auf das zweite Verschlussteil ein, dass es im entlasteten Zustand automatisch in eine Position zurückgeführt wird, in der es nicht sperrend auf das Betätigungselement einwirkt. Die Rückstellmittel können beispielsweise eine mechanische oder magnetische Vorspannung zwischen dem zweiten Verschlussteil und dem Betätigungselement bereitstellen. Alternativ kann das zweite Verschlussteil auch relativ zum ersten Verschlussteil vorgespannt sein.

Denkbar und vorteilhaft ist auch, die ohnehin vorgesehenen magnetischen Mittel zum Erzeugen einer Anziehungskraft zwischen dem ersten Verschlussteil einerseits und dem Betätigungselement und/oder dem zweiten Verschlussteil andererseits so auszubilden, dass sie gleichzeitig als Rückstellmittel zum Überführen des zweiten Verschlussteils in die entsperrte Position wirken. Hierzu kann beispielsweise ein Magnet an dem zweiten Verschlussteil angeordnet werden, der von einem Magneten am ersten Verschlussteil angezogen wird, so dass das zweite Verschlussteil relativ zum ersten Verschlussteil magnetisch vorgespannt ist und in entlastetem Zustand in eine Position gezogen wird, in es nicht sperrend mit dem Betätigungselement zusammenwirkt. Im entlasteten Zustand kann die Verschlussvorrichtung durch Betätigen des Betätigungselementes dann in einfacher Weise geöffnet werden.

In einer anderen Variante der Verschlussvorrichtung können Rückstellmittel das Sperrelement bevorzugt in die gesperrte Position zurückstellen. Zur Öffnung muss dann erst das zweite Verschlussteil in die entsperrte Position gebracht werden, um das Betätigungselement betätigen zu können. Dies kann eine zusätzliche Sicherheit bei sicherheitsrelevanten Anwendungen gegen unbeabsichtigtes Öffnen bieten.

In einer weiteren Variante kann das zweite Verschlussteil mittels Hilfsrastungen zwischen zweitem Verschlussteil und Betätigungselement rastend zwischen der entsperrten Position und der gesperrten Position hin- und herbewegt werden.

In einer weiteren Variante sind am ersten Verschlussteil mehrere axial zueinander versetzte Rastabschnitte vorgesehen, so dass das Betätigungselement in mehreren unterschiedlichen Schließzuständen - z.B. zum Nachspannen eines Gurtes oder Einstellen eines Helmverschlusses auf verschiedene Längen - an dem ersten Verschlussteil angeordnet werden kann. Alle Schließzustände können je nach Belastung des zweiten Verschlussteils verriegelt oder entriegelt werden.

Der der Erfindung zugrunde liegende Gedanke soll nachfolgend anhand der in den Figuren dargestellten Ausführungsbeispiele näher erläutert werden. Es zeigen:
- Fig. 1A: eine Ansicht einer Ausführungsform einer Verschlussvorrichtung;
- Fig. 1B: eine Querschnittsansicht durch die Verschlussvorrichtung entlang der Linie A - A gemäß Fig. 1A;
- Fig. 1C: eine vergrößerte Ansicht der Verschlussvorrichtung gemäß Fig. 1A, 1B mit an erstem Verschlussteil und am zweiten Verschlussteil angeordneten Magneten;
- Fig. 1D: eine vergrößerte Ansicht der Verschlussvorrichtung gemäß Fig. 1A, 1B mit an erstem Verschlussteil und am Betätigungselement angeordneten Magneten;
- Fig. 2A - 2D: Ansichten einer Ausführungsform einer Verschlussvorrichtung, in belastetem Zustand;
- Fig. 3A - 3D: Ansichten der Ausführungsform gemäß Fig. 2A - 2D, jedoch in entlastetem Zustand;
- Fig. 4A - 4D: Ansichten einer weiteren Ausführungsform einer Verschlussvorrichtung, in belastetem Zustand;
- Fig. 5A - 5D: Ansichten der Verschlussvorrichtung gemäß Fig. 4A - 4D, jedoch in entlastetem Zustand;
- Fig. 6: eine Querschnittsansicht einer modifizierten Ausführungsform einer Verschlussvorrichtung, in belastetem Zustand;
- Fig. 7: eine Querschnittsansicht der Verschlussvorrichtung gemäß Fig. 6, jedoch in entlastetem Zustand;
- Fig. 8: eine perspektivische Explosionsansicht einer weiteren Ausführungsform einer Verschlussvorrichtung;
- Fig. 9A: eine Schnittansicht der Verschlussvorrichtung entlang der Linie A-A gemäß Fig. 8, in belastetem Zustand;
- Fig. 9B: eine Schnittansicht der Verschlussvorrichtung entlang der Linie A-A gemäß Fig. 8, in entlastetem Zustand;
- Fig. 10A: eine Schnittansicht der Verschlussvorrichtung entlang der Linie A-A gemäß Fig. 8, beim Schließen;
- Fig. 10B: eine Schnittansicht der Verschlussvorrichtung entlang der Linie A-A gemäß Fig. 8, beim Schließen;
- Fig. 10C: eine Schnittansicht der Verschlussvorrichtung entlang der Linie A-A gemäß Fig. 8, beim Öffnen;
- Fig. 11A, 11B: Explosionsansichten einer weiteren Ausführungsform einer Verschlussvorrichtung;
- Fig. 12A - 12D: Schnittansichten der Verschlussvorrichtung entlang der Linie A-A gemäß Fig. 11A beim Schließen und in geschlossenem Zustand in entlastetem sowie belastetem Zustand;
- Fig. 13A - 13C: Ansichten einer weiteren Ausführungsform einer Verschlussvorrichtung, bei der Rastabschnitts gewindeförmig ausgebildet sind;
- Fig. 14A - 14D: Ansichten einer weiteren Ausführungsform einer Verschlussvorrichtung, die mehrere Schließzustände aufweist;
- Fig. 15A - 15E: Ansichten einer weiteren Ausführungsform einer Verschlussvorrichtung, bei der das zweite Verschlussteil und das Betätigungselement über einen Sperrabschnitt einstückig miteinander verbunden sind, in unterschiedlichen Zuständen; und
- Fig. 16A - 161: Ansichten einer weiteren Ausführungsform einer Verschlussvorrichtung, bei der das zweite Verschlussteil und das Betätigungselement über einen Sperrabschnitt einstückig miteinander verbunden sind, in unterschiedlichen Zuständen.

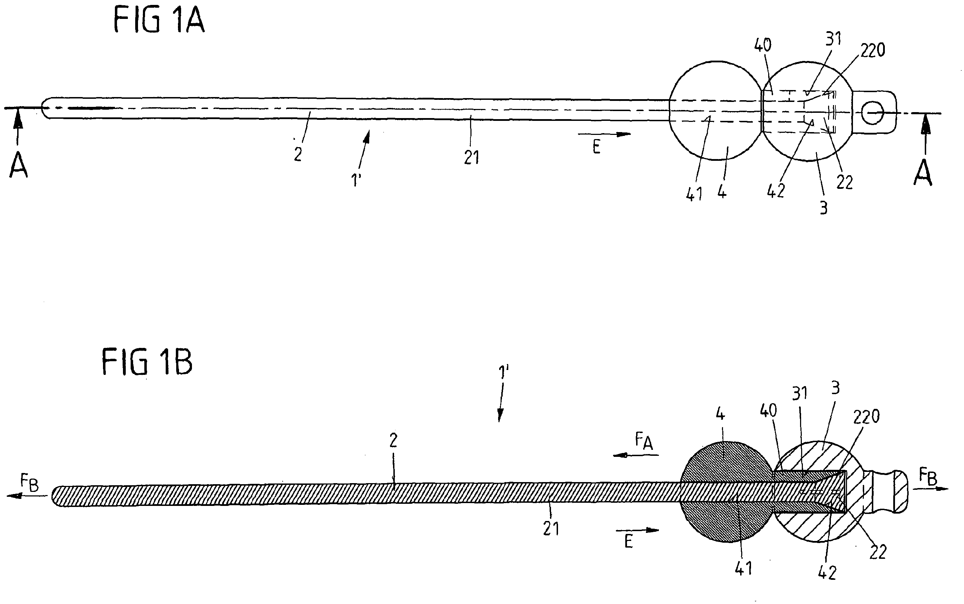

Fig. 1A und 1B zeigen eine Ausführungsform einer Verschlussvorrichtung 1', bei der an einem ersten Verschlussteil 3 ein zweites Verschlussteil 2 über ein Betätigungselement 4 angeordnet ist. Fig. 1A und 1B zeigen dabei die Verschlussvorrichtung 1' in ihrem Schließzustand, in dem das zweite Verschlussteil 2 über das Betätigungselement 4 mit dem ersten Verschlussteil 3 verbunden ist.

Die in Fig. 1A und 1B dargestellte Verschlussvorrichtung 1' kann zum Verbinden zweier auf Zug belasteter Elemente eingesetzt werden, von denen eines mit dem ersten Verschlussteil 3 und ein weiteres mit dem zweiten Verschlussteil 2 gekoppelt ist. Im Schließzustand sind dabei, wenn auf das erste Verschlussteil 3 und das zweite Verschlussteil 2 Zugkräfte FB wirken, das erste Verschlussteil 3 und das zweite Verschlussteil 2 fest miteinander verbunden, so dass die Verschlussvorrichtung 1' die wirkenden Zugkräfte FB aufnehmen kann.

Die Verschlussvorrichtung 1' kann beispielsweise zum Verbinden von Seilen oder Gurten oder auch als Schließvorrichtung für eine Tasche, einen Rucksack oder sonstige Aufbewahrungsbehälter eingesetzt werden oder überall dort, wo Bauteile lösbar miteinander zu verbinden sind.

Bei der in Fig. 1A und 1B dargestellten Verschlussvorrichtung 1' ist das zweite Verschlussteil 2, das in dem dargestellten Beispiel zumindest abschnittsweise stangenförmig ausgebildet ist und entsprechend einen stangenförmigen Abschnitt 21 aufweist, verschieblich an dem Betätigungselement 4 angeordnet und durchgreift hierzu eine Führungsöffnung 41 des Betätigungselementes 4. Das Betätigungselement 4 kann hierbei derart an dem zweiten Verschlussteil 2 angeordnet sein, dass es nicht von dem zweiten Verschlussteil 2 rutschen kann.

An seinem dem ersten Verschlussteil 3 zugewandten Ende weist das zweite Verschlussteil 2 einen konisch ausgebildeten Sperrabschnitt 22 auf, der ausgebildet ist, mit seiner konischen Mantelfläche mit einer ebenfalls konisch geformten Auflaufschräge im Endbereich der Führungsöffnung 41 des Betätigungselementes 4 zusammenzuwirken.

Zum Herstellen der Verbindung des zweiten Verschlussteils 2 mit dem ersten Verschlussteil 1 wird das zweite Verschlussteil 2 zusammen mit dem Betätigungselement 4 in eine Befestigungsrichtung E an das erste Verschlussteil 3 angesetzt, indem das Betätigungselement 4 mit einem beispielsweise zylindrischen Abschnitt 40 in eine entsprechend geformte Aussparung 31 an dem ersten Verschlussteil 3 eingesetzt wird. Zwischen dem Abschnitt 40 und der Aussparung 31 besteht eine Haftreibung, die durch entsprechende Oberflächenbeschaffenheit des Abschnitts 40 und/oder der Aussparung 31 in ihren Eigenschaften angepasst werden kann und das Betätigungselement 4 an dem ersten Verschlussteil 3 hält. Über das Betätigungselement 4 ist damit das zweite Verschlussteil 2 mit dem ersten Verschlussteil 3 verbunden.

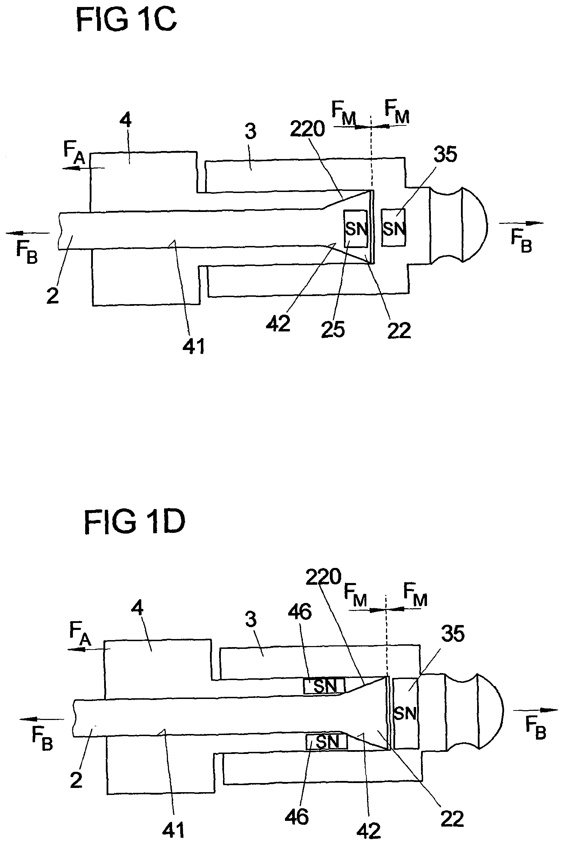

Um das Herstellen der Verbindung des zweiten Verschlussteils 2 mit dem ersten Verschlussteil 3 zu unterstützen, sind, wie in Fig. 1C und Fig. 1D dargestellt, an dem ersten Verschlussteil 3 und dem zweiten Verschlussteil 2 und/oder dem Betätigungselement 4 Magnete 25, 35, 46 angeordnet, die eine magnetischen Anziehungskraft FM erzeugen und bewirken, dass der Schließzustand weitestgehend automatisch hergestellt wird, wenn das Betätigungselement 4 dem ersten Verschlussteil 3 angenähert wird.

Bei der Ausführungsform gemäß Fig. 1C sind dabei an dem ersten Verschlussteil 3 und dem zweiten Verschlussteil 2 jeweils ein Magnet 25, 35 angeordnet.

Bei der Ausführungsform gemäß Fig. 1D weisen das erste Verschlussteil 3 und das Betätigungselement 4 jeweils einen Magneten 35, 46 auf.

Die Magnete 25, 35, 46 sind derart gepolt (d.h. sie sind mit entgegen gesetzten Polen einander zugewandt), dass sie eine Anziehungskraft FM erzeugen, die das Einführen des Abschnitts 40 des Betätigungselementes 4 in die Aussparung 31 des ersten Verschlussteils 3 unterstützt. Die Magnete 25, 35, 46 können dabei so ausgebildet sein, dass die magnetische Anziehungskraft FM größer ist als die zwischen dem Abschnitt 40 und der Aussparung 31 wirkende (Haft-)Reibung, so dass der Abschnitt 40 selbsttätig in die Aussparung 31 eingezogen wird.

Anstelle eines der Magneten 25, 35, 46 kann auch ein Anker aus einem ferromagnetischen Material verwendet werden, der selbst kein magnetisches Feld erzeugt, aber von dem zugeordneten anderen Magneten 25, 35, 46 angezogen wird.

Die Verwendung magnetischer Mittel in Form der Magnete 25, 35, 46 ermöglicht ein einfaches, haptisch angenehmes Schließen, das weitestgehend selbsttätig erfolgt, wenn die miteinander zu verbindenden Verschlussteile 2, 3 einander angenähert werden.

In einem belasteten Zustand der Verschlussvorrichtung 1' wirken Zugkräfte FB auf das zweite Verschlussteil 2 ein, die die Verschlussvorrichtung 1' auf Zug belasten. Wirken Zugkräfte FB zwischen erstem Verschlussteil 3 und zweitem Verschlussteil 2, so bewegt sich das zweite Verschlussteil 2 entgegen der Befestigungsrichtung E zumindest um eine geringe Wegstrecke relativ zum Betätigungselement 4, das dabei durch Haftreibung und/oder durch Wirkung der Magnete 25, 35, 46 an dem ersten Verschlussteil 3 gehalten wird. Dadurch läuft der Sperrabschnitt 22 mit einer durch seine konische äußere Mantelfläche gebildete Auflaufschräge 220 auf eine Auflaufschräge 42 am Ende der Führungsöffnung 41 auf und weitet damit den Abschnitt 40 derart auf, dass der Abschnitt 40 gegen die innere Wandung der Aussparung 31 gepresst und das Betätigungselement 4 reibschlüssig in der Aussparung 31 gehalten wird. In belastetem Zustand ist die Verschlussvorrichtung 1' damit auf selbsthemmende Weise gesperrt, so dass auch große Zugkräfte FB aufgenommen werden können.

Um das Aufweiten des Abschnitts 40 zu ermöglichen, kann der Abschnitt 40 zumindest abschnittsweise elastisch ausgebildet sein, beispielsweise indem elastische Arme an dem Abschnitt 40 ausgebildet sind.

In entlastetem Zustand hingegen wirken keine oder nur geringe Zugkräfte FB zwischen dem ersten Verschlussteil 3 und dem zweiten Verschlussteil 2. In diesem Zustand ist die Verschlussvorrichtung 1' nicht gesperrt, so dass durch Betätigen des Betätigungselementes 4 die Verbindung des ersten Verschlussteils 3 mit dem zweiten Verschlussteil 2 gelöst werden kann. Hierzu wird das Betätigungselement 4 durch Aufbringen einer Zugkraft FA entgegen der Befestigungsrichtung E aus der Aussparung 31 gezogen, was ohne weiteres möglich ist, da der Sperrabschnitt 22 nicht pressend auf das Betätigungselement 4 einwirkt. Nur die Haftreibung zwischen dem Abschnitt 40 und der Aussparung 31, die ohne Einwirken des Sperrabschnitts 22 besteht, sowie die magnetische Anziehungskraft FM muss überwunden werden.

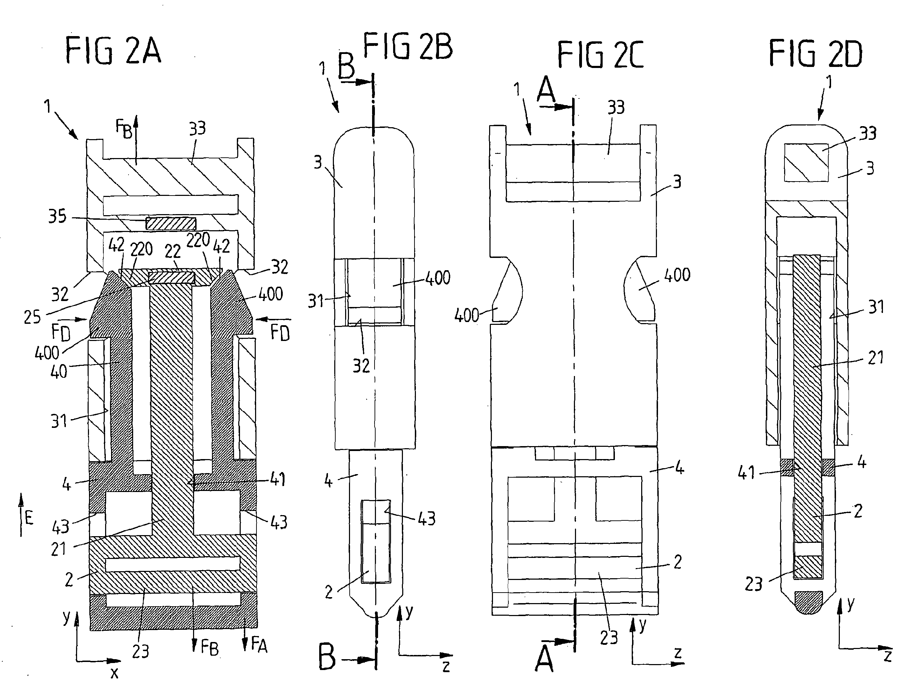

Fig. 2 bis 7 zeigen Ausführungsformen von Verschlussvorrichtungen 1, bei denen das Betätigungselement 4 im Schließzustand rastend an dem ersten Verschlussteil 3 gehalten ist, wobei die Rastverbindung zwischen dem Betätigungselement 4 und dem ersten Verschlussteil 3 in belastetem Zustand des zweiten Verschlussteils 2 gesperrt, in entlastetem Zustand des zweiten \/erschlussteils hingegen lösbar ist. Bauteile gleicher Funktion sind dabei, soweit zweckdienlich, mit denselben Bezugszeichen versehen.

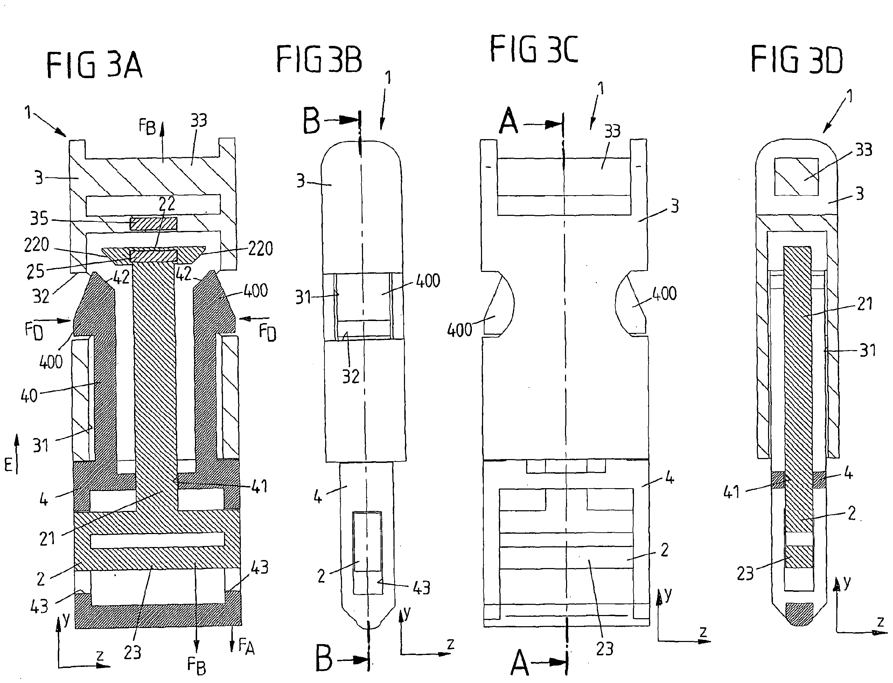

Bei der ersten Ausführungsform der Verschlussvorrichtung 1 gemäß Fig. 2A bis 2D und 3A bis 3D ist ein zweites Verschlussteil 2 über ein Betätigungselement 4 in einem Schließzustand rastend mit einem ersten Verschlussteil 3 verbunden. Fig. 2B und 2C zeigen hier eine Seitenansicht und eine Draufsicht der Verschlussvorrichtung 1, Fig. 2A zeigt eine Schnittansicht entlang der Linie B - B gemäß Fig. 2B und Fig. 2D zeigt eine Schnittansicht entlang der Linie A - A gemäß Fig. 2C. Fig. 2A bis 2D zeigen die Verschlussvorrichtung 1 in einem belasteten Zustand, während in Fig. 3A bis 3D entsprechende Ansichten der Verschlussvorrichtung 1 in entlastetem Zustand dargestellt sind.

Bei der Verschlussvorrichtung 1 gemäß Fig. 2A bis 2D und 3A bis 3D ist das Betätigungselement 4 mit zumindest abschnittsweise elastisch ausgebildeten Abschnitten 40 in Form von Rastarmen in einer Aussparung 31 des ersten Verschlussteils 3 angeordnet, wenn im Schließzustand das zweite Verschlussteil 2 über das Betätigungselement 4 mit dem ersten Verschlussteil 3 verbunden ist. An den Abschnitten 40 sind Rastelemente 400 ausgebildet, die in diesem Schließzustand mit Rastabschnitte ausbildenden Rastöffnungen 32 formschlüssig in Eingriff stehen. Im Schließzustand sind das Betätigungselement 4 und das erste Verschlussteil 3 damit formschlüssig miteinander verbunden.

Im Schließzustand kann die Verschlussvorrichtung 1 auch große Zugkräfte FB aufnehmen, die über Verbindungsbügel 23, 33 am ersten Verschlussteil 3 und zweiten Verschlussteil 2 zum Befestigen von z.B. Seilen oder Gurten auf das erste Verschlussteil 3 und das zweite Verschlussteil 2 ausgeübt werden. In belastetem Zustand bei zwischen dem ersten Verschlussteil 3 und dem zweiten Verschlussteil 2 wirkenden Zugkräften FB befindet sich die Verschlussvorrichtung 1 in einem Sperrzustand, in dem die rastende Verbindung zwischen dem Betätigungselement 4 und dem ersten Verschlussteil 3 nicht gelöst werden kann und das zweite Verschlussteil 2 nicht vom ersten Verschlussteil 3 entfernt werden kann.

Das zweite Verschlussteil 2 ist an dem Betätigungselement 4 verschieblich gelagert und hierzu mit einem stangenförmigen Abschnitt 21 in einer zentralen Führungsöffnung 41 und mit einem Endabschnitt in Form des Haltebügels 23 in Führungsöffnungen 43 des Betätigungselementes 4 geführt. Das zweite Verschlussteil 3 kann dabei um eine vorbestimmte Wegstrecke relativ zu dem Betätigungselement 4 verschoben werden, jedoch nicht von dem Betätigungselement 4 entnommen werden.

In belastetem Zustand, dargestellt in den Ansichten gemäß Fig. 2A bis 2D, verschiebt sich das zweite Verschlussteil 2 durch Wirkung der Zugkraft FB am Betätigungselement 4 und kommt mit einem Sperrabschnitt 22 in Anlage mit den Rastelementen 400. Der Sperrabschnitt 22, der als sich quer zur Erstreckungsrichtung des stangenförmigen Abschnitts 21 erstreckender Endabschnitt nach Art eines Kopfes ausgebildet ist, weist Auflaufschrägen 220 auf, die bei einer Zugkraft FB auf das zweite Verschlussteil 2 auf rückseitig der Rastelemente 400 ausgebildete Auflaufschrägen 42 derart auflaufen, dass die Rastelemente 400 formschlüssig in die Rastöffnungen 32 des ersten Verschlussteils 3 gepresst werden. Die Pressung verstärkt sich dabei mit zunehmender Zugkraft FB auf das zweite Verschlussteil 2, so dass bei belasteter Verschlussvorrichtung 1 die Rastelemente 400 nicht aus den Rastöffnungen 32 entfernt werden können und die Verschlussvorrichtung 1 gesperrt ist. Über das Betätigungselement 4 wird somit das zweite Verschlussteil 2 sicher und (in belastetem Zustand) unlösbar mit dem ersten Verschlussteil 3 verbunden.

In entlastetem Zustand hingegen wirken keine oder nur geringe Zugkräfte FB auf das erste Verschlussteil 3 und das zweite Verschlussteil 2 ein. In diesem entlasteten Zustand, dargestellt in Fig. 3A bis 3D, wirkt der Sperrabschnitt 22 nicht sperrend auf die Rastelemente 400 ein, so dass die rastende Verbindung der Rastelemente 400 des Betätigungselements 4 mit den Rastöffnungen 32 des ersten Verschlussteils 3 durch Aufbringen einer Druckkraft FD auf die Rastelemente 400 gelöst und die Rastelemente 400 aus den Rastöffnungen 32 gedrückt werden können. Ist die Rastverbindung zwischen den Rastelementen 400 und den Rastöffnungen 32 gelöst, kann das Betätigungselement 4 entgegen der Befestigungsrichtung E zusammen mit dem zweiten Verschlussteil 2 aus der Aussparung 31 des ersten Verschlussteils 3 entnommen werden.

In entlastetem Zustand ist damit in einfacher Weise ein Öffnen der Verschlussvorrichtung 1 möglich, so dass das zweite Verschlussteil 2 vom ersten Verschlussteil 3 getrennt und die Verschlussvorrichtung 1 geöffnet werden kann.

Ein wesentlicher Vorteil dieser Verschlussvorrichtung 1 besteht darin, dass in belastetem Zustand die Verbindung zwischen erstem Verschlussteil 3 und zweitem Verschlussteil 2 unlösbar ist und somit ein (unbeabsichtigtes) Öffnen der Verschlussvorrichtung 1 in belastetem Zustand nicht möglich ist. In entlastetem Zustand hingegen kann die Verschlussvorrichtung 1 in einfacher und angenehmer Weise geöffnet werden.

Um die Verschlussvorrichtung 1 zu schließen, wird das Betätigungselement 4 zusammen mit dem zweiten Verschlussteil 2 an das erste Verschlussteil 3 angesetzt und hierzu in die Aussparung 31 des ersten Verschlussteil 3 eingesteckt, bis die Rastelemente 400 formschlüssig mit den Rastöffnungen 32 in Eingriff gelangen. Um den Schließvorgang zu unterstützen, sind an dem ersten Verschlussteil 3 und dem zweiten Verschlussteil 2 jeweils ein Magnet 25, 35 angeordnet, die eine magnetische Anziehungskraft FM zwischen erstem Verschlussteil 3 und zweitem Verschlussteil 2 generieren und bewirken, dass das zweite Verschlussteil 2 unter Wirkung der Anziehungskraft FM zusammen mit dem Betätigungselement 4 in die Aussparung 31 eingezogen wird.

Dadurch, dass das zweite Verschlussteil 2 magnetisch vom ersten Verschlussteil 3 angezogen wird, erfolgt der Schließvorgang automatisch mit in entsperrter Position befindlichem zweiten Verschlussteil 2 (siehe Fig. 3A), wobei durch die führende Lagerung des zweiten Verschlussteils in den Führungsöffnungen 43 das Betätigungselement 4 mitgenommen wird.

Vorteilhafterweise sind die Magnete 25, 35 derart beschaffen, dass die generierte magnetische Anziehungskraft FM stärker ist als die zum Einstecken des Betätigungselementes 4 in die Aussparung 31 erforderliche und insbesondere durch die Elastizität der Abschnitte 40 bedingte Kraft, so dass der Schließvorgang weitestgehende selbsttätig abläuft.

Selbstverständlich kann auch bei der Ausführungsform gemäß Fig. 2A bis 2D und 3A bis 3D in alternativer Ausgestaltung ein Magnet an dem Betätigungselement 4 anstatt an dem zweiten Verschlussteil 2 angeordnet sein.

Zudem ist denkbar, mehr als einen Magneten 25, 35 an jedem Teil 2, 3, 4 anzuordnen.

Damit das zweite Verschlussteil 2 in dem entlasteten Zustand gemäß Fig. 3A bis 3D in eine Position gelangt, in der die Rastelemente 400 nicht gesperrt sind (wie in Fig. 3A dargestellt), kann das zweite Verschlussteil 2 relativ zu dem Betätigungselement 4 zudem zusätzlich derart vorgespannt sein, dass beispielsweise durch Verwendung einer mechanischen Feder oder durch geeignete (zusätzliche) Magnetmittel das zweite Verschlussteil 2 in entlastetem Zustand in die in Fig. 3A dargestellte Position gedrückt wird.

Bei der in Fig. 2A bis 2D und Fig. 3A bis 3D dargestellten Ausführungsform ist eine solche Vorspannung jedoch nicht unbedingt erforderlich, da in entlastetem Zustand bei Aufbringen einer Druckkraft FD auf die Rastelemente 400 das zweite Verschlussteil 2 durch Wirkung der Auflaufschrägen 42, 220 in die entsperrte Position gedrückt wird und damit in entlastetem Zustand das zweite Verschlussteil 2 einem Öffnen der Rastverbindung nicht entgegensteht.

Es kann aber auch vorgesehen sein, dass Rückstellmittel das zweite Verschlussteil in die gesperrte Position zurückstellen. Dann rastet die Verschlussvorrichtung 1 zwar schwerer, aber auch sicherer ein, und das zweite Verschlussteil 2 muss sich gar nicht oder nur um eine geringe Wegstrecke bewegen, wenn bei Anlegen einer Last das zweite Verschlussteil 2 in die gesperrte Position überführt wird.

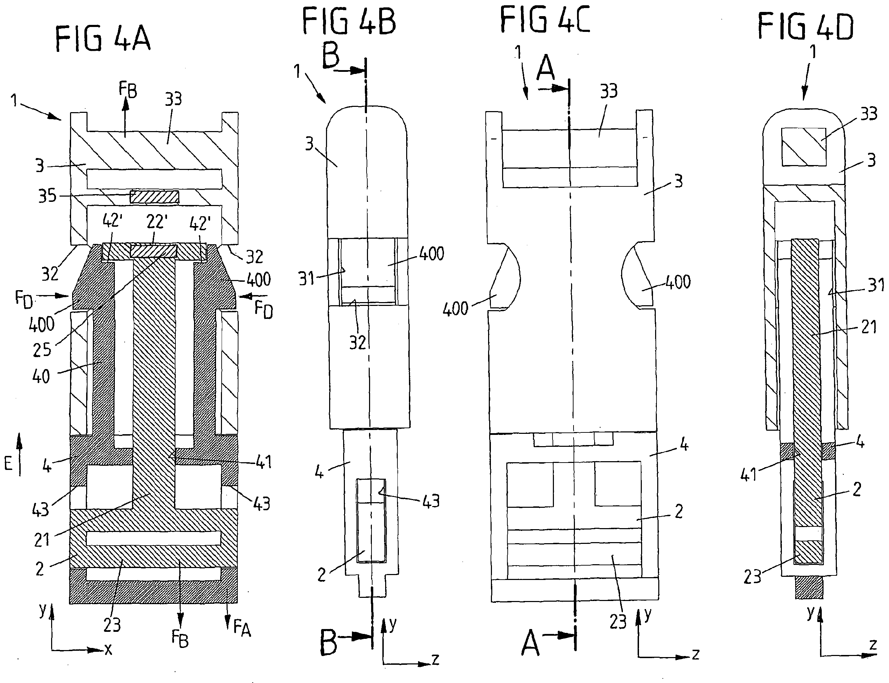

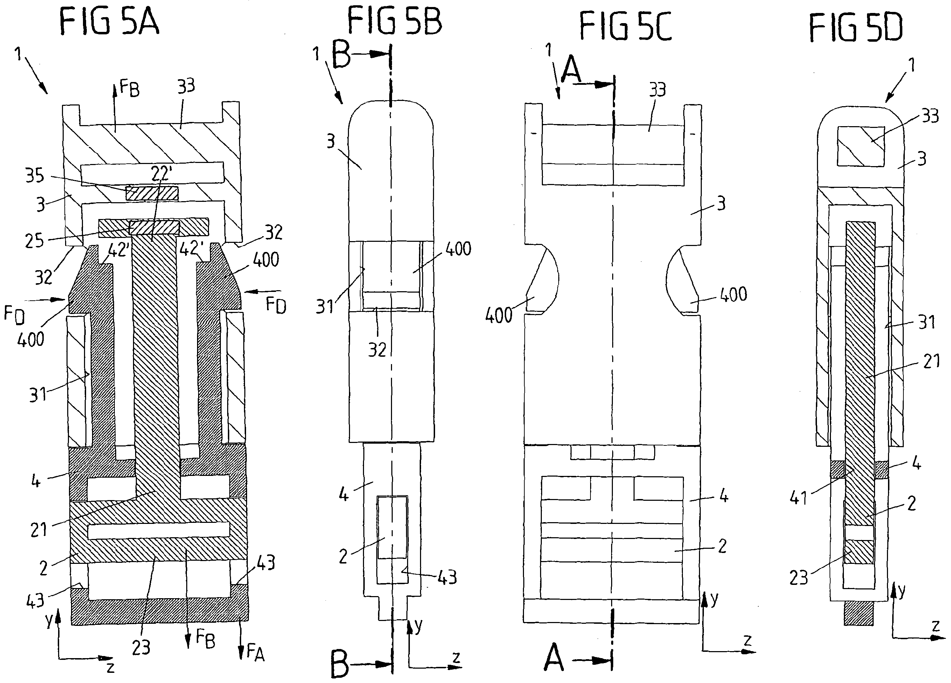

Eine modifizierte Ausführungsform einer Verschlussvorrichtung 1 ist in Fig. 4A bis 4D in belastetem Zustand und Fig. 5A bis 5D in entlastetem Zustand dargestellt. Die Wirkweise der Verschlussvorrichtung 1 ist dabei im Wesentlichen identisch der Verschlussvorrichtung 1 gemäß Fig. 2A bis 2D und 3A bis 3D. Der einzige Unterschied besteht in der Ausbildung des Sperrabschnitts 22', der bei der in Fig. 4A bis 4D und 5A bis 5D dargestellten Ausführungsform rechtwinklig ausgebildet ist und keine Auflaufschräge aufweist.

In belastetem Zustand, dargestellt in Fig. 4A, liegt der Sperrabschnitt 22' in Aufnahmeabschnitten 42' rückseitig der Rastelemente 400 formschlüssig ein und sperrt damit die Rastelemente 400 derart, dass sie nicht nach innen aus den Rastöffnungen 32 gedrückt werden können. Bei der Ausführungsform gemäß Fig. 4A bis 4D und Fig. 5A bis 5D läuft der Sperrabschnitt 22' damit bei Belastung nicht auf die Rastelemente 400 auf, sondern liegt formschlüssig in den Aufnahmeabschnitten 42' an den Rastelementen 401 und sperrt auf diese Weise die Verschlussvorrichtung 1.

In entlastetem Zustand, dargestellt in Fig. 5A bis 5D, ist der Sperrabschnitt 22' aus den Aufnahmeabschnitten 42' der Rastelemente 400 entfernt, so dass die Rastelemente 400 durch Aufbringen einer Druckkraft FD aus den Rastöffnungen 32 gedrückt werden können und damit die Rastverbindung zwischen dem Betätigungselement 4 und dem ersten Verschlussteil 3 gelöst werden kann.

Wiederum sind an erstem Verschlussteil 3 und zweitem Verschlussteil 2 Magnete 25, 35 vorgesehen, die zum einen den Schließvorgang unterstützen und zum anderen bewirken, dass das zweite Verschlussteil 2 in entlastetem Zustand der Verschlussvorrichtung 1 automatisch in seine entsperrte Position gezogen wird (siehe Fig. 5A).

Damit in entlastetem Zustand das zweite Verschlussteil 2 in die entsperrte Position relativ zum Betätigungselement 4 gelangt (siehe Fig. 5A), kann eine zusätzliche Vorspannung zwischen dem zweiten Verschlussteil 2 und dem Betätigungselement 4 auf mechanische oder magnetische Weise derart vorgesehen, dass in entlastetem Zustand das zweite Verschlussteil 2 in die in Fig. 5A dargestellte entsperrte Position gebracht wird, der Sperrabschnitt 22' außer Eingriff mit den Aufnahmeabschnitten 42' der Rastelemente 400 gelangt und die Rastverbindung geöffnet werden kann.

In analoger Weise kann vorgesehen sein, das zweite Verschlussteil 2 durch geeignete Rückstellmittel in die gesperrte Position vorzuspannen.

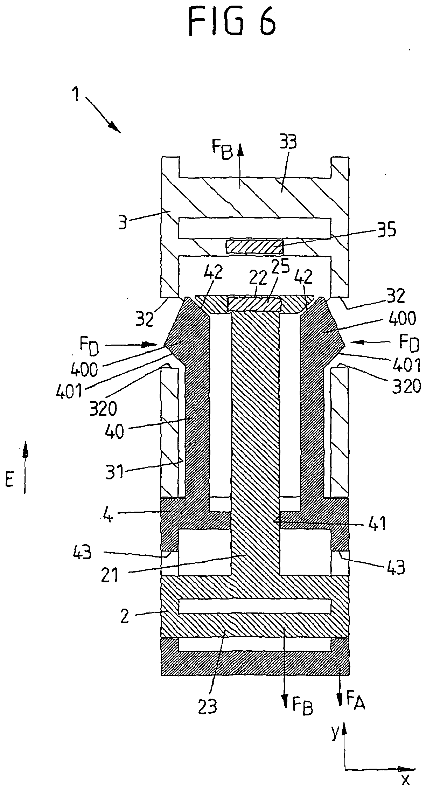

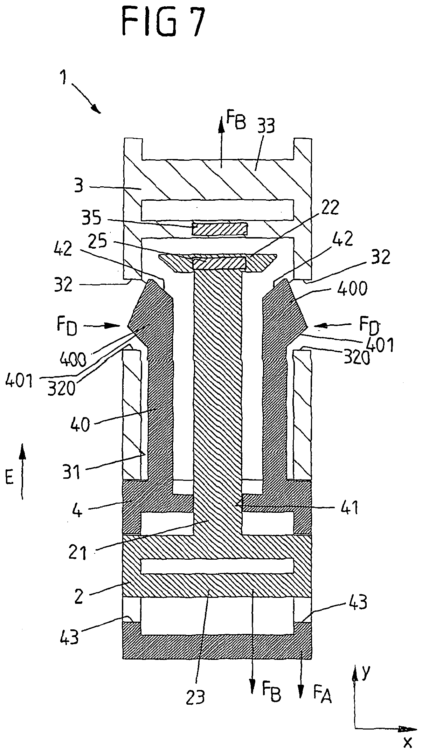

In Fig. 6 und 7 ist eine modifizierte Ausführungsform einer Verschlussvorrichtung 1 dargestellt, die sich von der Ausführungsform gemäß Fig. 2A bis 2D und Fig. 3A bis 3D lediglich dadurch unterscheidet, dass an den Rastelementen 400 an dem Randabschnitt 320 der Rastöffnungen 32 zugewandten Seiten Schrägen 401 vorgesehen sind, die bewirken, dass bei der modifizierten Verschlussvorrichtung 1 in entlastetem Zustand durch Aufbringen einer Zugkraft FA entgegen der Befestigungsrichtung E das Betätigungselement 4 in einfacher Weise aus der Aussparung 31 des ersten Verschlussteils 3 gezogen werden kann und damit das zweite Verschlussteil 2 vom ersten Verschlussteil 3 lösbar ist. Das Aufbringen einer Druckkraft FD quer zur Befestigungsrichtung E auf die Rastelemente 400 ist nicht erforderlich, so dass sich die Handhabung zum Öffnen der Verschlussvorrichtung 1 weiter erleichtert.

Fig. 6 zeigt hier die Verschlussvorrichtung 1 in belastetem Zustand, in dem die Verschlussvorrichtung 1 durch Zusammenwirken des Sperrabschnitts 22 des zweiten Verschlussteils 2 mit den Rastelementen 400 des Betätigungselementes 4 die Verschlussvorrichtung 1 gesperrt ist. Die Rastelemente 400 können in diesem Zustand nicht aus den Rastöffnungen 32 entfernt werden, da eine Bewegung der Rastelemente 400 nach innen durch den Sperrabschnitt 22 des zweiten Verschlussteils 2 gesperrt ist.

In entlastetem Zustand hingegen, dargestellt in Fig. 7, sind die Rastelemente 400 nicht gesperrt, so dass bei Aufbringen einer Zugkraft FA auf das Betätigungselement 4 die Rastelemente 400 mit ihren Schrägen 401 auf den in Fig. 7 unteren Randabschnitt 320 der Rastöffnungen 32 auflaufen und auf diese Weise aus den Rastöffnungen 32 gedrückt werden. Durch Aufbringen der Zugkraft FA kann damit das Betätigungselement 4 und zusammen mit dem Betätigungselement 4 das zweite Verschlussteil 2 aus der Aussparung 31 des ersten Verschlussteils 3 gezogen werden.

Selbstverständlich kann auch bei der Ausführungsform gemäß Fig. 4A bis 4D und Fig. 5A bis 5D eine solche Modifikation vorgesehen werden, indem Schrägen 401 an den Rastelementen 400 angeformt werden.

Anstelle der Schrägen 401 können die Rastelemente 400 auch abgerundet sein, so dass die Rastelemente 400 durch Wirkung der Zugkraft FA auf den Randabschnitt 320 der Rastöffnungen 32 auflaufen. Wesentlich ist hier, dass in entlastetem Zustand die Rastelemente 400 bei Zugwirkung auf das Betätigungselement 4 entgegen der Befestigungsrichtung E nicht mehr vollständig formschlüssig in den Rastöffnungen 32 am ersten Verschlussteil gehalten werden, sondern nur noch teilweise formschlüssig.

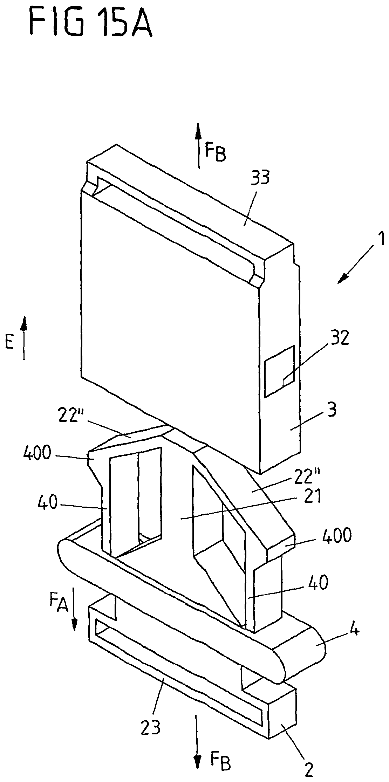

Fig. 15A bis 15E zeigen ein weiteres Ausführungsbeispiel einer Verschlussvorrichtung 1, die im Vergleich zu der Verschlussvorrichtung 1 gemäß Fig. 6 und 7 insbesondere dahingehend modifiziert ist, dass bei der Verschlussvorrichtung 1 gemäß Fig. 15A bis 15E ein zweites Verschlussteil 2 über Sperrabschnitte 22" einstückig mit einem Betätigungselement 4 verbunden und somit einstückig mit dem Betätigungselement 4 beispielsweise als Kunststoffformteil ausgebildet ist.

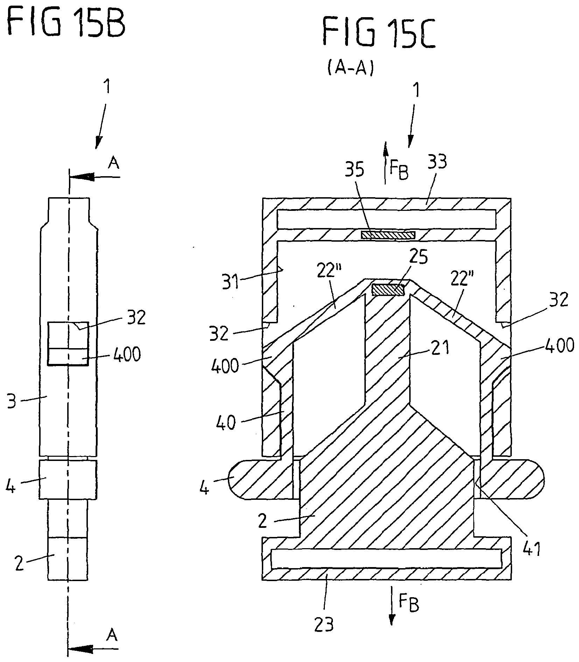

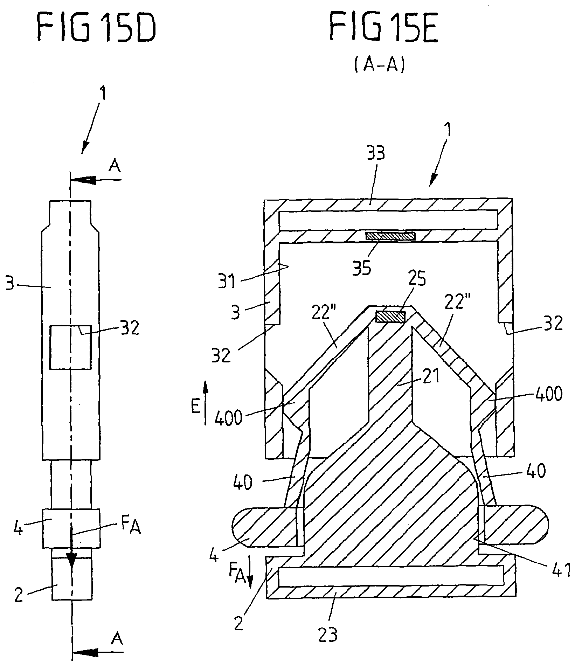

Fig. 15A bis 15E zeigen die Verschlussvorrichtung 1 in unterschiedlichen Zuständen. So zeigen Fig. 15A in einer perspektivischen Ansicht die Verschlussvorrichtung 1 in geöffnetem Zustand, Fig. 15B die Verschlussvorrichtung 1 in geschlossenem Zustand in einer Seitenansicht, Fig. 15C die Verschlussvorrichtung 1 in geschlossenem Zustand in einer Schnittansicht entlang der Linie A-A gemäß Fig. 15B, Fig. 15D die Verschlussvorrichtung in einer Seitenansicht beim Öffnen und Fig. 15E die Verschlussvorrichtung 1 in einer Querschnittsansicht entlang der Linie A-A gemäß Fig. 15D beim Öffnen.

Bauteile gleicher Funktion sind bei dem Ausführungsbeispiel in Fig. 15A bis 15E - soweit zweckdienlich - mit gleichen Bezugszeichen versehen.

Bei dem Ausführungsbeispiel gemäß Fig. 15A bis 15E ist das zweite Verschlussteil 2 über einen stangenförmigen Abschnitt 21 und zumindest abschnittsweise flexible Sperrabschnitte 22" mit ebenfalls zumindest abschnittsweise flexiblen Abschnitten 40 des Betätigungselements 4 verbunden und dabei verschiebbar in einer Führungsöffnung 41 am Betätigungselement 4 geführt (siehe beispielsweise Fig. 15 C). An den Abschnitten 40 des Betätigungselements 4 sind Rastelemente 400 angeordnet, die ausgebildet sind, in einem Schließzustand in Rastöffnungen 32 eines ersten Verschlussteils 3 einzugreifen.

In dem Schließzustand, dargestellt in Fig. 15B und 15C, ist das zweite Verschlussteil 2 zusammen mit dem Betätigungselement 4 in einer Aussparung 31 des ersten Verschlussteils 3 angeordnet, wobei die Rastelemente 400 mit den Rastöffnungen 32 formschlüssig in Eingriff stehen (siehe insbesondere die Querschnittsansicht gemäß Fig. 15C).

Wirken in dem Schließzustand, dargestellt in Fig. 15C, Zugkräfte FB (beispielsweise über an einem Verbindungsbügel 23 des zweiten Verschlussteils 2 und einem Verbindungsbügel 33 des ersten Verschlussteils 3 angreifende Seile oder Gurte) auf das zweite Verschlussteil 2 und das erste Verschlussteil 3 ein derart, dass das zweite Verschlussteil 2 entgegen der Befestigungsrichtung E (siehe Fig. 15A) relativ zu dem ersten Verschlussteil 3 belastet wird, so wirkt das zweite Verschlussteil 2 über die Sperrabschnitte 22" auf die Rastelemente 400 des Betätigungselements 4 ein, so dass die Rastelemente 400 in der in Fig. 15C angedeuteten Pfeilrichtung nach außen und somit in Eingriff mit den Rastöffnungen 32 gedrückt werden. Die Verschlussvorrichtung 1 ist damit gesperrt: in belastetem Zustand kann das zweite Verschlussteil 2 nicht aus dem ersten Verschlussteil 3 entfernt werden.

Wird hingegen in entlastetem Zustand der Verschlussvorrichtung 1 (bei dem keine oder nur geringe Zugkräfte FB zwischen dem ersten Verschlussteil 3 und dem zweiten Verschlussteil 2 wirken) eine Zugkraft FA, wie in Fig. 15E dargestellt, entgegen der Befestigungsrichtung E auf das Betätigungselement 4 ausgeübt, so werden die Rastelemente 400 in die in Fig. 15E angedeutete Pfeilrichtung über die zumindest abschnittsweise elastischen Abschnitte 40 des Betätigungselements 4 nach innen und somit in Richtung eines Lösens von den Rastöffnungen 32 des ersten Verschlussteils 3 beaufschlagt, so dass das Betätigungselement 4 und zusammen mit dem Betätigungselement 4 das zweite Verschlussteil 2 aus der Aussparung 31 des ersten Verschlussteils 3 entnommen und somit die Verschlussvorrichtung 1 gelöst werden kann.

Wie aus Fig. 15E ersichtlich, sind die Rastelemente 400 entgegen der Befestigungsrichtung E angeschrägt, so dass sie bei Betätigung des Betätigungselements 4 durch Aufbringen einer Zugkraft FA entgegen der Befestigungsrichtung E in leichter Weise aus den Rastöffnungen 32 gleiten können und somit die Verschlussvorrichtung 1 gelöst werden kann.

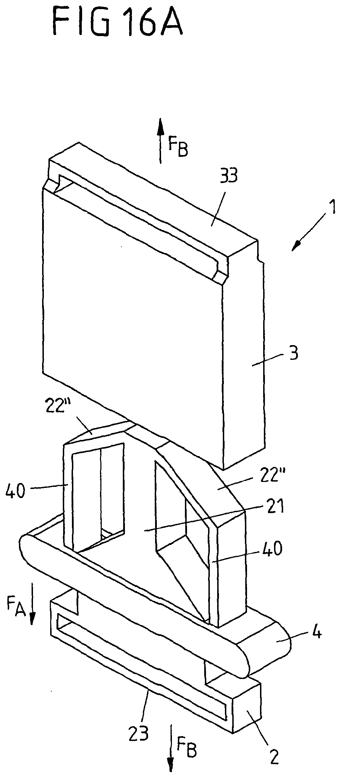

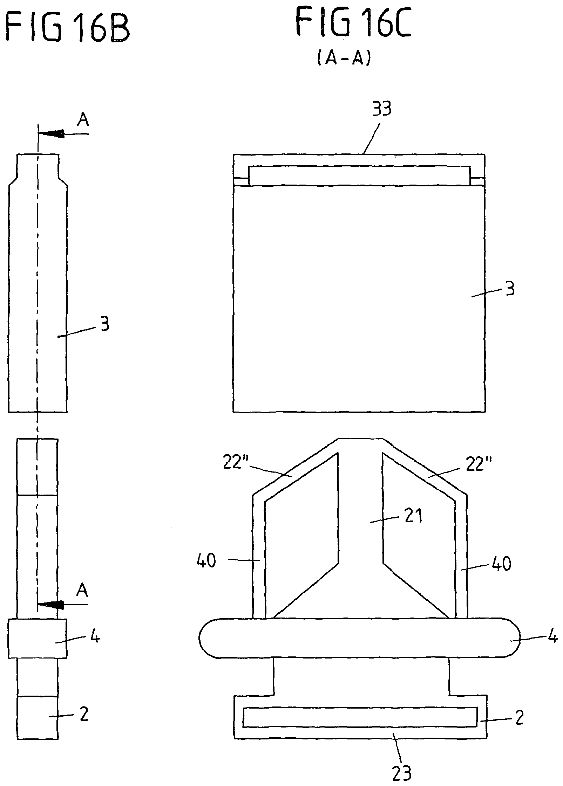

Bei einem gegenüber dem Ausführungsbeispiel gemäß, Fig. 15A bis 15E modifizierten Ausführungsbeispiel einer Verschlussvorrichtung 1, dargestellt in Fig. 16A bis 16I in unterschiedlichen Zuständen, sind keine Rastelemente 400 am Betätigungselement 4 und keine Rastöffnungen 32 am ersten Verschlussteil 3 vorgesehen, sondern das zweite Verschlussteil 2 wird zusammen mit dem Betätigungselement 4 im belasteten Zustand durch Reibschluss an dem ersten Verschlussteil 3 gehalten. Der Aufbau und auch die Funktionsweise sind ansonsten identisch wie vorangehend für das Ausführungsbeispiel gemäß Fig. 15A bis 15E geschildert.

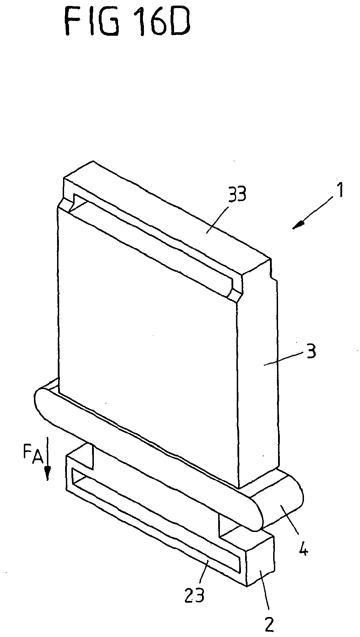

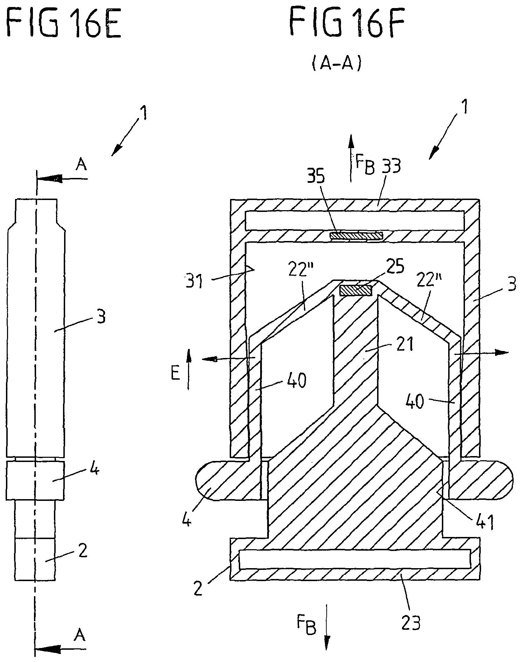

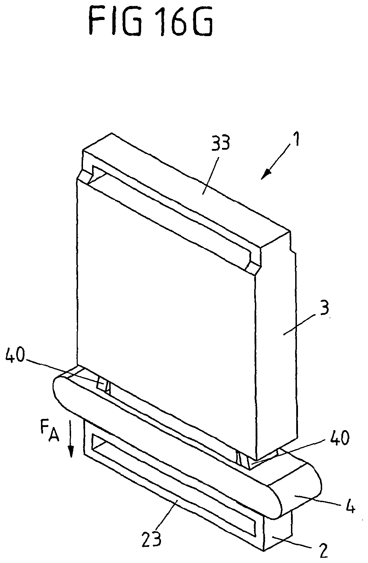

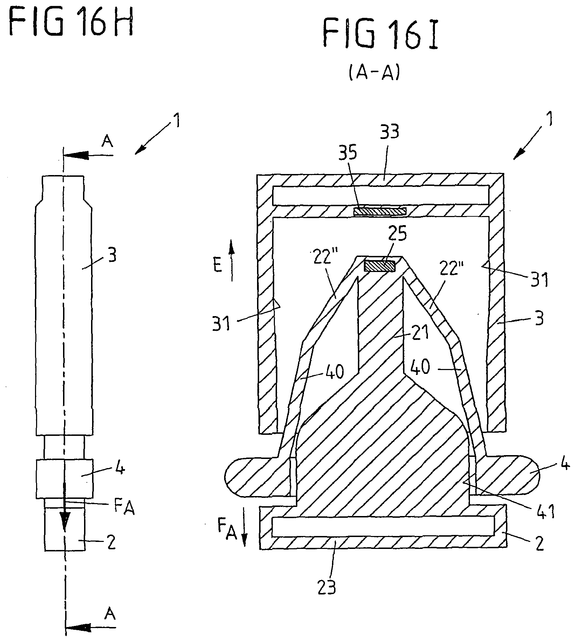

Fig. 16A bis 16C zeigen in unterschiedlichen Ansichten die Verschlussvorrichtung 1 in geöffnetem Zustand, Fig. 16D bis 16F im Schließzustand und Fig. 16G bis 16I beim Öffnen. Fig. 16F und 16I zeigen hier jeweils Querschnittsansichten entlang der Linie A-A gemäß Fig. 16E bzw. gemäß Fig. 16H.

Im Schließzustand, dargestellt beispielsweise in Fig. 16F, liegen das zweite Verschlussteil 2 und das Betätigungselement 4 über Abschnitte 40 reibschlüssig an der inneren Wandung der Aussparung 31 des ersten Verschlussteils 3 an, wobei aufgrund des Reibschlusses das zweite Verschlussteil 2 und das Betätigungselement 4 nicht ohne Weiteres aus der Aussparung 31 des ersten Verschlussteils 3 gleiten können.

Wird das zweite Verschlussteil 2 durch Zugkräfte FB gegenüber dem ersten Verschlussteil 3 entgegen der Befestigungsrichtung E belastet, so werden die Abschnitte 40 in die in Fig. 16F angedeutete Pfeilrichtung durch Wirkung der Sperrabschnitte 22" nach außen gedrückt und damit in Reibschluss mit der inneren Wandung der Aussparung 31 des ersten Verschlussteils 3, so dass das zweite Verschlussteil 2 selbsthemmend unter Reibschluss in der Aussparung 31 des ersten Verschlussteils 3 gehalten ist.

Wird in entlastetem Zustand hingegen zum Öffnen der Verschlussvorrichtung 1, wie in Fig. 16I dargestellt, das Betätigungselement 4 durch Aufbringen einer Zugkraft FA entgegen der Befestigungsrichtung E betätigt, so werden die Abschnitte 40 des Betätigungselements 4 in die in Fig. 16I angedeutete Pfeilrichtung nach innen belastet und somit außer Reibschluss mit der inneren Wandung der Aussparung 31 des ersten Verschlussteils 3 gebracht, so dass das zweite Verschlussteil 2 zusammen mit dem Betätigungselement 4 von dem ersten Verschlussteil 2 entnommen werden kann.

Wie in Fig. 16F dargestellt, sind an dem zweiten Verschlussteil 2 und dem ersten Verschlussteil 3 Magnete 25, 35 angeordnet, die derart zueinander gepolt sind, dass das Überführen der Verschlussvorrichtung 1 in den Schließzustand gemäß Fig. 16D bis 16F unterstützt durch eine magnetische Anziehungskraft erfolgt.

Die Magnete 25, 35 können dabei auch dazu ausgebildet und dimensioniert sein, in unbelastetem Zustand der Verschlussvorrichtung 1 das zweite Verschlussteil 2 an dem ersten Verschlussteil 3 derart zu halten, dass das zweite Verschlussteil 2 nicht aus der Aussparung 31 des ersten Verschlussteils 3 rutschen kann.

Bei den Sperrabschnitten 22" der Ausführungsbeispiele gemäß Fig. 15A bis 15E und 16A bis 161 handelt es sich um abschnittsweise flexible, jedoch drucksteife Verbindungsarme, die den stangenförmigen Abschnitt 21 des zweiten Verschlussteils 2 mit den ebenfalls abschnittsweise flexiblen und drucksteifen Abschnitten 40 des Betätigungselements 4 verbinden. Die nach Art von Spreizarmen ausgebildeten Sperrabschnitte 22" sind dabei jeweils unter einem Winkel von kleiner 90° zur Befestigungsrichtung E und von größer 90° zu dem zugeordneten Abschnitt 40 des Betätigungselements 4 angeordnet.

Unter einer entgegen der Befestigungsrichtung E auf das zweite Verschlussteil 2 wirkenden Last wird der Winkel zur Befestigungsrichtung E vergrößert und entsprechend der Winkel zu dem zugeordneten Abschnitt 40 verkleinert, so dass der jeweils zugeordnete Abschnitt 40 des Betätigungselements 4 nach außen gedrückt wird, um die Rastelemente 400 in Eingriff mit den Rastöffnungen 32 bzw. die Abschnitte 40 in reibschlüssige Anlage mit der inneren Wandung der Aussparung 31 zu drücken.

Umgekehrt wird bei einer Betätigung des Betätigungselements 4 der Winkel zur Befestigungsrichtung E verkleinert und entsprechend der Winkel zu dem zugeordneten Abschnitt 40 vergrößert, so dass der jeweils zugeordnete Abschnitt 40 des Betätigungselements 4 nach innen hin mit Kraft beaufschlagt, so dass die Rastelemente 400 außer Eingriff mit den Rastöffnungen 32 bzw. die Abschnitte 40 außer Reibschluss mit der inneren Wandung der Aussparung 31 gebracht werden können.

Die Sperrabschnitte 22" können einstückig mit dem Betätigungselement 4 und dem zweiten Verschlussteil 2 beispielsweise als Kunststoffformteil ausgebildet sein.

Denkbar ist in diesem Zusammenhang aber auch eine mehrstückige Ausbildung von Betätigungselement 4, Sperrabschnitten 22" und zweitem Verschlussteil 2. Die Sperrabschnitte 22" können dabei zum Beispiel gelenkig mit dem stangenförmigen Abschnitt 21 des zweiten Verschlussteils 2 einerseits und mit dem jeweils zugeordneten Abschnitt 40 des Betätigungselements 4 andererseits verbunden sein. Die Sperrabschnitte 22" können in diesem Fall beispielsweise als drucksteife Elemente aus Metall hergestellt sein.

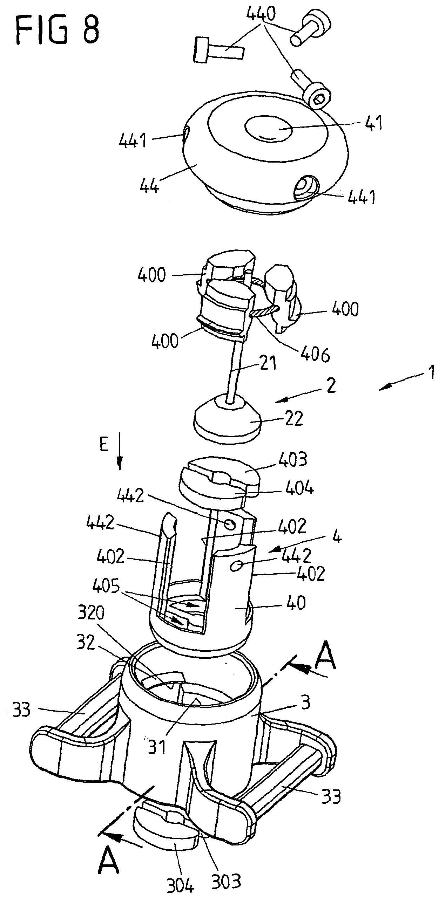

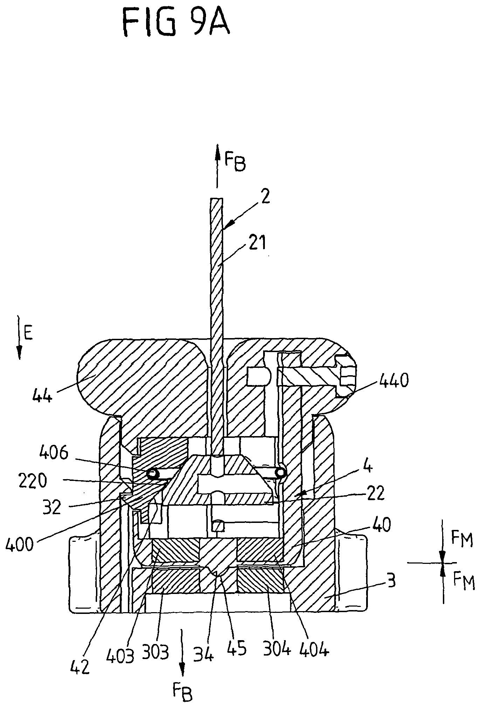

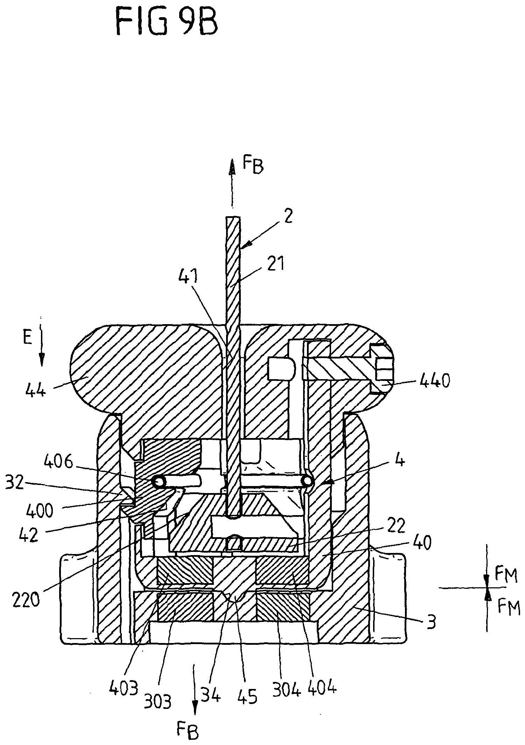

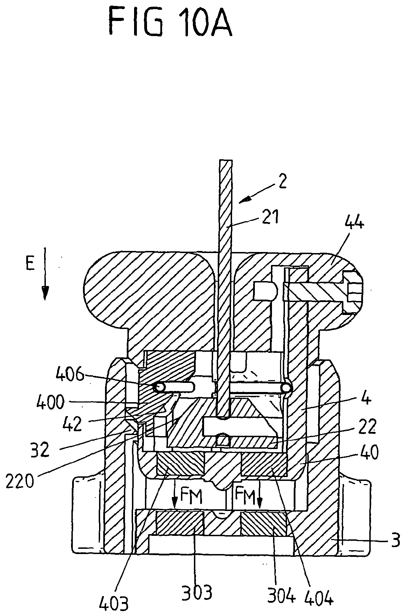

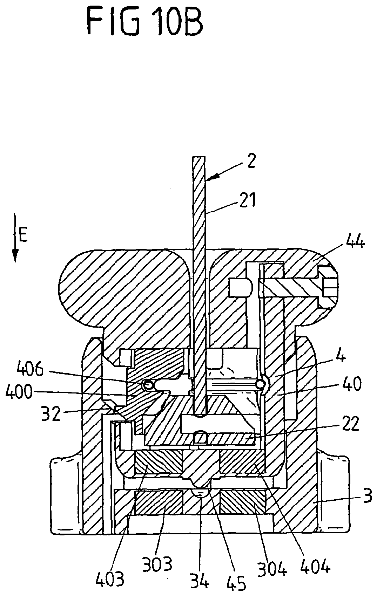

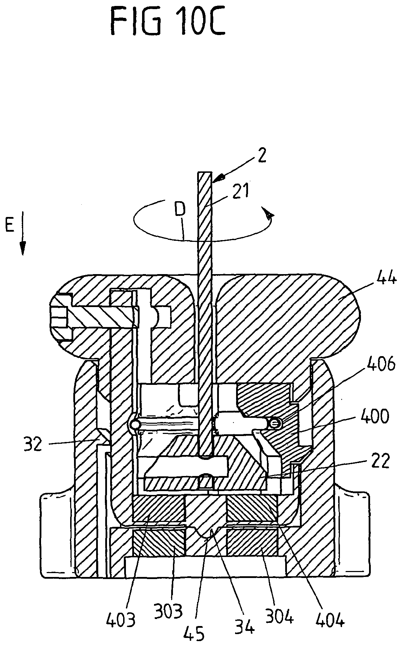

Fig. 8 bis 10 zeigen eine Ausführungsform einer Verschlussvorrichtung 1, bei der das Betätigungselement 4 durch ein Verdrehen relativ zum ersten Verschlussteil 3 lösbar ist. Fig. 8 zeigt hier eine perspektivische Explosionsansicht, Fig. 9A zeigt die Verschlussvorrichtung 1 in einem Schließzustand unter Belastung, Fig. 9B im Schließzustand, jedoch unbelastet, Fig. 10A und 10B bei Herstellen des Schließzustands und Fig. 10C beim Öffnen. Wiederum sind Bauteile gleicher Funktion, soweit zweckdienlich, mit denselben Bezugszeichen wie vorangehend beschrieben.

Wie in der perspektivischen Explosionsansicht gemäß Fig. 8 dargestellt ist, weist die Verschlussvorrichtung 1 ein aus einem Kopf 44 und einem in seinen äußeren Umrissen zylindrischen Abschnitt 40 bestehendes Betätigungselement 4 auf, an dem das zweite Verschlussteil 2 angeordnet ist und das in die Befestigungsrichtung E in eine Aussparung 31 an dem ersten Verschlussteil 3 zum Herstellen des Schließzustands der Verschlussvorrichtung 1 eingesetzt werden kann.

An dem Betätigungselement 4 sind Rastelemente 400 radial zur Befestigungsrichtung E beweglich angeordnet, die in montiertem Zustand des Betätigungselements 4 in Aussparungen 402 am Abschnitt 40 zu liegen kommen. Wie beispielsweise aus der Schnittansicht gemäß Fig. 9A ersichtlich, sind die Rastelemente 400 über eine Feder 406 in radialer Richtung vorgespannt.

Zum Montieren des Betätigungselementes 4 kann der Kopf 44 über Schrauben 440 mit dem Abschnitt 40 verbunden werden, wobei hierzu die Schrauben 440 den Kopf 44 an Öffnungen 441 durchgreifen und in Aufnahmen 442 am Abschnitt 40 eingreifen.

Wie beispielsweise aus der Schnittansicht gemäß Fig. 9A ersichtlich, ist im Inneren des Abschnitts 40 ein in seinen äußeren Umrissen konischer Sperrabschnitt 22 des zweiten Verschlussteils 2 angeordnet, der mit einem beispielsweise flexiblen Abschnitt 21 in Form eines Zugmittels verbunden ist. Der Abschnitt 21 durchgreift den Kopf 44 des Betätigungselements 4 an einer Führungsöffnung 41 und dient der Verbindung des aus dem Sperrabschnitt 22 und dem Abschnitt 21 bestehenden zweiten Verschlussteils 2 mit einem zu verbindenden Element, beispielsweise einem Seil oder einem Gurt.

An der Aussparung 31 des ersten Verschlussteils 3 sind drei Rastabschnitte 32 jeweils in Form eines Sägezahns angeordnet, die sich jeweils über einen Winkelbereich kleiner 60° in Umfangsrichtung innerhalb der Aussparung 31 erstrecken und ausgebildet sind, mit jeweils einem Rastelement 400 des Betätigungselements 4 in Eingriff zu treten.

Fig. 9A zeigt die Verschlussvorrichtung 1 im Schließzustand unter Belastung, bei der eine Zugkraft FB an dem zweiten Verschlussteil 2 angreift und das zweite Verschlussteil auf Zug entgegen der Befestigungsrichtung E relativ zum ersten Verschlussteil 3 belastet. Wie in der Ansicht gemäß Fig. 9A ersichtlich, steht im Schließzustand das Rastelement 400 formschlüssig mit dem Rastabschnitt 32 des ersten Verschlussteils 3 in Eingriff, so dass das Betätigungselement 4 formschlüssig an dem ersten Verschlussteil 3 gehalten wird. Über den Sperrabschnitt 22 wird gleichzeitig das zweite Verschlussteil 2 an dem Betätigungselement 4 gehalten, so dass das zweite Verschlussteil 2 mit dem ersten Verschlussteil 3 verbunden ist.

Ähnlich wie vorangehend bezüglich der anderen Ausführungsformen geschildert, liegt in dem belasteten Zustand gemäß Fig. 9A das zweite Verschlussteil 2 mit seinem Sperrabschnitt 22 an den drei Rastelementen 400 an, wobei der konisch ausgebildete Sperrabschnitt 22 mit seiner äußeren, eine Auflaufschräge ausbildenden Mantelfläche 220 auf Auflaufschrägen 42 rückseitig der Rastelemente 400 aufläuft und diese radial nach außen drückt, so dass die Rastelemente 400 nicht außer Eingriff mit den Rastabschnitten 32 am ersten Verschlussteil 3 gelangen können.

Bei geeigneter Ausführung kann dieses radiale Nach-Außen-Drücken unterschiedliche Vorteile bewirken:
- es kann nur zur Sicherung von möglichst leichtgängigen, d.h. mit einer schwachen Feder 406 vorgespannten Rastelementen 400 dienen und
- es kann durch Reibschluss oder Formschluss ein unbeabsichtigtes Drehen des Betätigungselements 400 verhindern.

Im entlasteten Zustand gemäß Fig. 9B liegt der Sperrabschnitt 22 nicht in Anlage mit den Rastelementen 400, so dass diese in radialer Richtung nicht gesperrt sind.

Fig. 10A und 10B zeigen die Verschlussvorrichtung 1 beim Herstellen des Schließzustandes. Hierzu wird, wie in Fig. 10A dargestellt, das Betätigungselement 4 zusammen mit dem zweiten Verschlussteil 2 in die Befestigungsrichtung E in die Aussparung 31 des ersten Verschlussteils 3 eingesetzt. Beim Herstellen des Schließzustandes befindet sich der Sperrabschnitt 22 des zweiten Verschlussteils in einer entriegelten Position, in der der Sperrabschnitt 22 nicht in Anlage mit den Rastelementen 400 ist, so dass diese sich radial zur Befestigungsrichtung E nach innen bewegen können. Um zu gewährleisten, dass der Sperrabschnitt 22 bei Herstellen des Schließzustandes in der Tat in der entriegelten Position ist, kann eine Vorspannung des Sperrabschnitts 22 relativ zum Betätigungselement 4 vorgesehen sein, wobei diese Vorspannung mechanisch durch Verwendung einer Feder oder auch magnetisch durch Verwendung von Magneten ausgeführt sein kann.

Wie in Fig. 10A dargestellt ist, sind am Betätigungselement 4, nämlich an der dem Boden der Aussparung 31 zugewandten Stirnseite des Abschnitts 40, zwei Magnete 403, 404 angeordnet, die zusammen mit Magneten 303, 304 am Boden der Aussparung 31 des ersten Verschlussteils 3 den Schließvorgang unterstützen. Dies erfolgt dadurch, dass die Magnete 303, 403 bzw. 304, 404 so gepolt sind, dass sie sich jeweils gegenseitig anziehen. Auf diese Weise wird eine Magnetkraft generiert, die in die Befestigungsrichtung E wirkt und eine Anziehungskraft FM auf das Betätigungselement 4 in die Aussparung 31 des ersten Verschlussteils 3 hinein erzeugt.

Wie aus Fig. 8 ersichtlich, sind die Magnete 303, 304, 403, 404 jeweils sichelförmig ausgebildet, wobei die Magnete 403, 404 in Aufnahmen 405 am Betätigungselement 4 und die Magnete 303, 304 in entsprechenden Aufnahmen (in Fig. 8 nicht sichtbar) am ersten Verschlussteil 3 angeordnet und fixiert sind.

Die Magnete 303, 304, 403, 404 haben zum einen den Zweck, den Schließvorgang durch Erzeugen einer magnetischen Anziehungskraft FM in Richtung der Befestigungsrichtung E zu unterstützen, wobei die magnetische Anziehungskraft FM größer sein kann als die zwischen dem Betätigungselement 4 und dem ersten Verschlussteil 3 auftretenden Reibkräfte und die Federkraft der Feder 406, so dass der Schließvorgang im Wesentlichen selbsttätig abläuft.

Zum anderen bewirken die Magnete 303, 304, 403, 404 durch ihre Anordnung und Polung, dass sich das Betätigungselement 4 zum Herstellen des Schließzustands selbsttätig in eine solche Position dreht, in der die Rastelemente 400 am Betätigungselement 4 in Eingriff mit den Rastabschnitten 32 am ersten Verschlussteil 3 gelangen können. Diesem liegt der Gedanke zugrunde, dass die Rastabschnitt 32 nur bestimmte Winkelbereiche umfänglich der Aussparung 31 überdecken, so dass das Betätigungselement 4 in einer bestimmten Verdrehposition in die Aussparung 31 eingeführt werden muss, um formschlüssig mit dem ersten Verschlussteil 3 verriegeln zu können. Durch die Anordnung und Polung der Magnete 303, 304, 403, 404 wird gewährleistet, dass das Betätigungselement 4 automatisch die gewünschte Verdrehposition zum Herstellen des Schließzustands einnimmt, indem die Magnete 303, 304, 403, 404 durch die wirkenden Magnetkräfte das Betätigungselement 4 in die erforderliche Position relativ zum ersten Verschlussteil 3 verdrehen.

Wird, wie in Fig. 10B dargestellt, das Betätigungselement 4 unter Unterstützung der Magnete 303, 304, 403, 404 in die Aussparung 31 am ersten Verschlussteil 3 eingeführt, so bewegen sich die Rastelemente 400 radial nach innen und gleiten an den sägezahnförmigen Rastabschnitten 32 entlang, bis das Betätigungselement 4 mit seinem Abschnitt 40 ganz in die Aussparung 31 am ersten Verschlussteil 3 eingeführt ist. Dieser Schließzustand ist in Fig. 9A und 9B dargestellt.

Unterseitig des Abschnitts 40 ist ein Punktlager 45 angeordnet, das in eine entsprechende Stützstelle 34 am Boden der Aussparung 31 im Schließzustand zu liegen kommt und bewirkt, dass das Betätigungselement 4 im Schließzustand axial punktförmig gegenüber dem ersten Verschlussteil 3 abgestützt ist. Das Betätigungselement 4 und das erste Verschlussteil 3 liegen damit an ihren einander zugewandten stirnseitigen Flächen nicht flächig aufeinander, so dass zwischen den Magneten 303, 304 einerseits und 403, 404 andererseits ein vorbestimmter Abstand erhalten wird. Auf diese Weise wird ein axiales Drehlager geschaffen, das ein reibungsarmes Verdrehen des Betätigungselements 4 innerhalb der Aussparung 31 relativ zum ersten Verschlussteil 3 ermöglicht.

Zum Öffnen der Verschlussvorrichtung 1 wird das Betätigungselement 4 in der Aussparung 31 des ersten Verschlussteils 3 in eine Verdrehrichtung D verdreht, wie in Fig. 10C dargestellt, so dass die Rastelemente 400 sich in Umfangsrichtung relativ zu den Rastabschnitten 32 des ersten Verschlussteils 3 bewegen, bis sie außer Eingriff mit den Rastabschnitten 32 gelangen. Dies ist möglich, da die Rastelemente 400 und die Rastabschnitte 32 jeweils einen Winkelbereich kleiner 60° überdecken, so dass zwischen den einzelnen Rastabschnitten 32 in Winkelbereichen größer 60° umfänglich keine rastenden Elemente an der Aussparung 31 vorhanden sind und das Betätigungselement 4, wenn die Rastelemente 400 in diese Bereiche verdreht werden, nicht mehr formschlüssig in der Aussparung 31 gehalten wird und aus der Aussparung 31 des ersten Verschlussteils 3 entnommen werden kann.

Am Betätigungselement 4 und/oder an der Aussparung 31 können Anschläge derart vorgesehen sein, dass eine Verdrehung des Betätigungselements 4 relativ zur Aussparung 31 gerade um den erforderlichen Winkel möglich ist, um die Rastelemente 400 außer Eingriff mit den Rastabschnitten 32 zu bringen.

Durch das Verdrehen des Betätigungselements 4 werden gleichzeitig auch die Magnete 303, 304 einerseits und 403, 404 andererseits gegeneinander verdreht, so dass sich die einander zugeordneten Magnete 303, 403 bzw. 304, 404 nicht mehr frontal anziehend gegenüberstehen, sondern zueinander verdreht sind. Durch Verdrehen der Magnete 303, 304, 403, 404 zueinander wird die zwischen den Magneten 303, 304, 403, 404 wirkende magnetische Anziehungskraft abgeschwächt oder sogar in eine Abstoßungskraft umgekehrt (wenn sich nach dem Verdrehen die Magnete 303, 304, 403, 404 zumindest abschnittsweise mit gleichnamigen Polen gegenüber stehen, siehe Fig. 10C), so dass zum Öffnen der Verschlussvorrichtung 1 nur eine geringe Magnetkraft überwunden werden muss oder die Magnetkraft gar den Öffnungsvorgang abstoßend unterstützt.

Denkbar ist auch, die Verschlussvorrichtung so auszubilden, dass das Betätigungselement 4 durch Verschieben (und nicht durch Verdrehen) quer zur Befestigungsrichtung E außer Eingriff mit dem ersten Verschlussteil 3 gebracht werden kann.

In wiederum anderer Ausgestaltung ist auch möglich, an der Aussparung Auflaufschrägen derart vorzusehen, dass bei einem Verdrehen oder Verschieben quer zur Befestigungsrichtung E die Rastelemente 400 auf diese Auflaufschrägen auflaufen und dadurch radial nach innen und außer Eingriff mit den Rastabschnitten 32 gedrückt werden.

In wiederum anderer Ausgestaltung können die Rastabschnitte 32 auch nach Art eines Gewindes ausgebildet sein, wobei durch das Verdrehen des Betätigungselementes 4 in der Aussparung 31 die Rastelemente 400 entlang dem Gewinde geführt und außer Eingriff mit dem Gewinde geschraubt werden können.

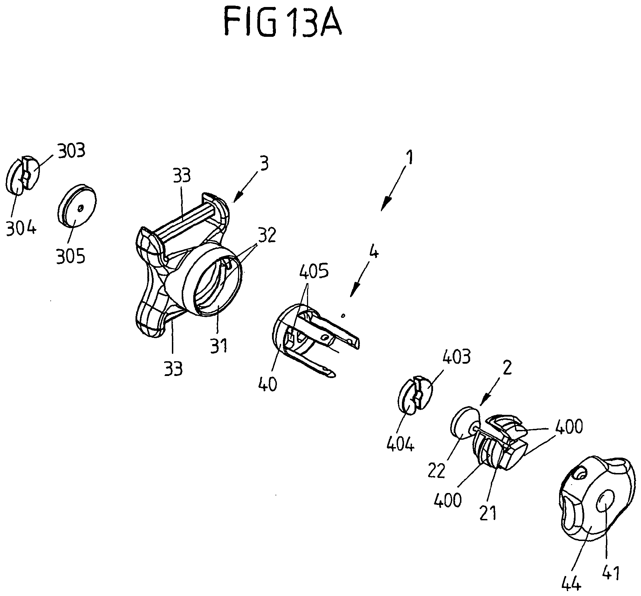

Eine solche, gegenüber der Ausführungsform gemäß Fig. 8 bis 10 modifizierte Ausführungsform, bei der die Rastabschnitte 32 nach Art eines Gewindes in der Aussparung 31 des ersten Verschlussteils 3 ausgebildet sind, ist in Fig. 13A bis 13C dargestellt. Hierbei sind drei Rastabschnitte 32 vorgesehen, die umfänglich in der Aussparung 31 verlaufen, wobei jeweils einem Rastelement 400 des Betätigungselementes 4 ein Rastabschnitt 32 zugeordnet ist. Die Rastelemente 400 weisen dem Gewinde angepasste Rastabschnitte auf, die im Schließzustand formschlüssig mit den Rastabschnitten 32 in der Aussparung 31 in Eingriff sind.

Analog der Ausführungsform gemäß Fig. 8 bis 10 sind auch bei der Ausführungsform gemäß Fig. 13A bis 13C Magnete 303, 304 über eine Bodenplatten 305 am ersten Verschlussteil 3 und Magnete 403, 404 über Aufnahmen 405 am Betätigungselement 4 angeordnet, die das Herstellen des Schließzustandes unterstützen.

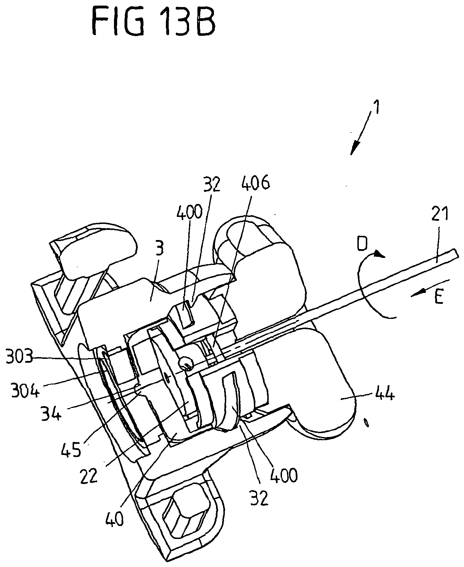

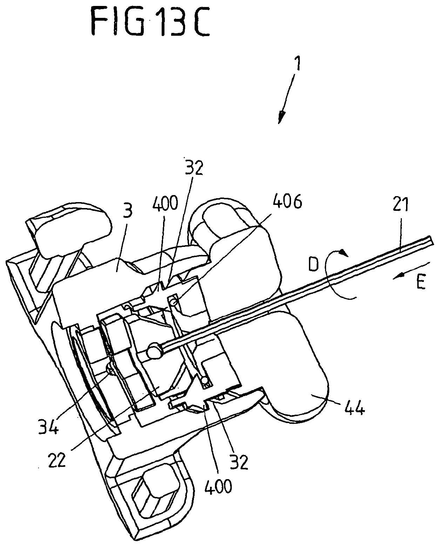

Wie in den perspektivischen Ansichten gemäß Fig. 13B und 13C ersichtlich, kann die Verschlussvorrichtung 1 dadurch gelöst werden, dass das Betätigungselement 4 in Verdrehrichtung D relativ zum ersten Verschlussteil 3 verdreht wird und dadurch die Rastelemente 400 entlang der gewindeförmigen Rastabschnitte 32 laufen und außer Eingriff mit den Rastabschnitten 32 gelangen. Dadurch, dass das Betätigungselement 4 auf diese Weise aus der Aussparung 31 geschraubt wird, kann die Verbindung des ersten Verschlussteils 3 mit dem zweiten Verschlussteil 2 gelöst werden.

Wiederum steht bei Belastung der Sperrabschnitt 22 mit den Rastelementen 400 in Kontakt und sperrt auf diese Weise die Verschlussvorrichtung 1 durch Herstellung eines Reibschlusses oder eines Formschlusses der Rastelemente 400 mit dem ersten Verschlussteil 3.

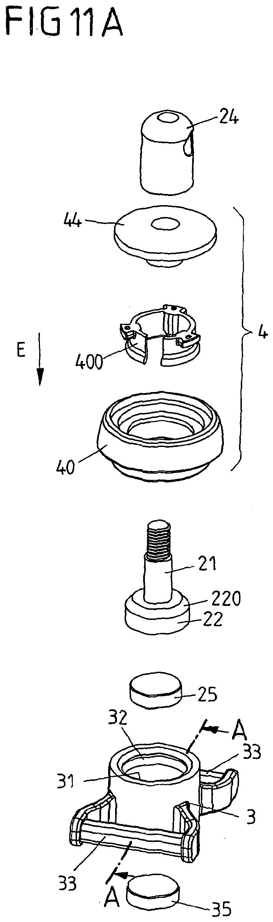

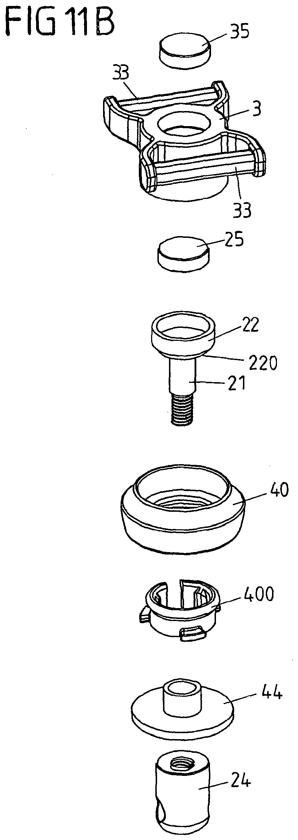

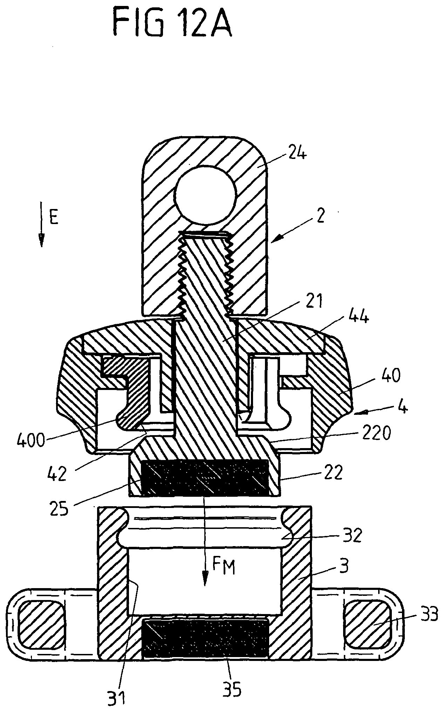

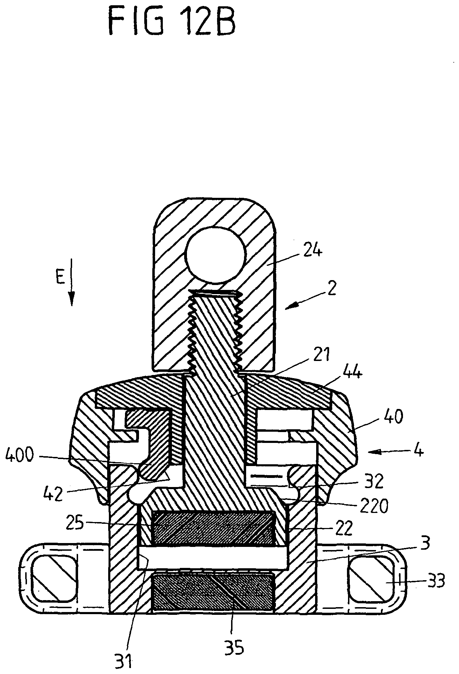

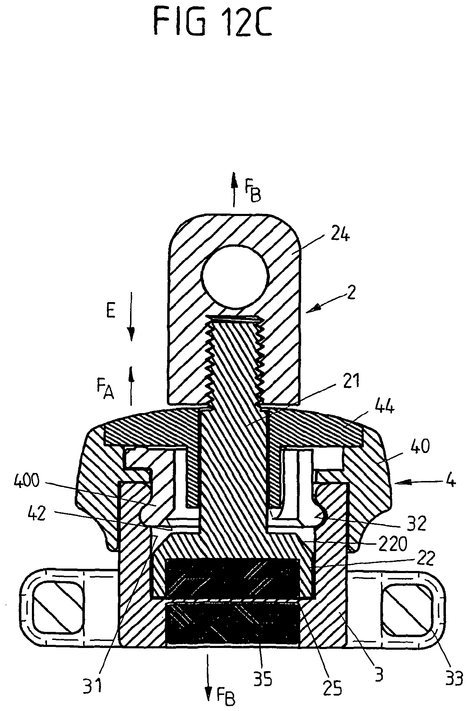

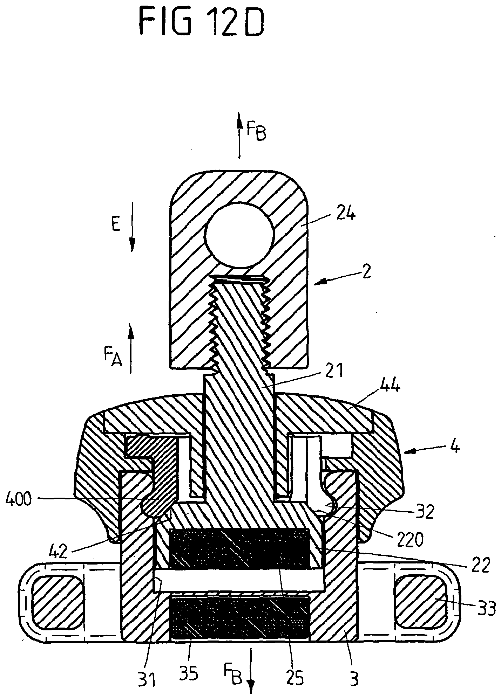

Eine weitere Ausführungsform einer Verschlussvorrichtung 1 ist in Fig. 11A, 11B und Fig. 12A bis 12D dargestellt. Fig. 11A und 11B zeigen hier zwei unterschiedliche Explosionsansichten, während Fig. 12A bis 12D die Verschlussvorrichtung 1 beim Herstellen des Schließzustands (Fig. 12A, 12B), im Schließzustand ohne Belastung (Fig. 12C) und im Schließzustand mit Belastung (Fig. 12D) darstellen.

Die in Fig. 11 und 12 dargestellte Ausführungsform der Verschlussvorrichtung 1 ist in ihrer Wirkweise grundlegend analog der in Fig. 6 und 7 dargestellten und vorangehend beschriebenen Ausführungsform. Zusätzlich sind bei der Ausführungsform gemäß Fig. 11 und 12 Magnete 25, 35 am zweiten Verschlussteil 2 einerseits und am ersten Verschlussteil 3 andererseits vorgesehen, die das Herstellen des Schließzustandes auf magnetische Weise unterstützen.

Bei der Ausführungsform gemäß Fig. 11 und 12 ist das zweite Verschlussteil 2 gebildet durch einen Sperrabschnitt 22, der über einen zylindrischen, stangenförmigen Abschnitt 21 mit einem Kopf 24 verbunden ist. Der Abschnitt 21 durchgreift das Betätigungselement 4, bestehend aus einem Kopf 44, einem zylindrischen Abschnitt 40 und einem Rastelement 400 in Form eines abschnittsweise geöffneten Ringes. Über den Kopf 24 ist sichergestellt, dass das zweite Verschlussteil 2 nicht von dem Betätigungselement 4 rutschen kann.

Zum Herstellen des Schließzustandes wird das Betätigungselement 4 mit daran angeordnetem zweiten Verschlussteil 2 in die Aussparung 31 des ersten Verschlussteils 3 eingesetzt, bis das Rastelement 400 mit einem zugeordneten Rastabschnitt 32 an der Aussparung 31 in Eingriff gelangt (siehe den Schließzustand in Fig. 12C). Das Herstellen des Schließzustandes wird dabei unterstützt durch eine magnetische Anziehungskraft FM zwischen dem Magnet 25 am zweiten Verschlussteil 2 und dem Magnet 35 am ersten Verschlussteil 3 in Befestigungsrichtung E. Durch die Anziehungskraft FM wird das zweite Verschlussteil 2 in die Aussparung 31 hinein gezogen, wobei das zweite Verschlussteil 2 das Betätigungselement 4 mitnimmt, bis dies mit dem Rastelement 400 in formschlüssigen Eingriff mit dem Rastabschnitt 32 am ersten Verschlussteil 3 gelangt.

Fig. 12C zeigt die Verschlussvorrichtung 1 im Schließzustand in entlastetem Zustand und Fig. 12D in belastetem Zustand. In belastetem Zustand wirken Zugkräfte FB auf das zweite Verschlussteil 2 ein und bewirken, dass der Sperrabschnitt 22 in rückseitige Anlage an die Rastelemente 400 gelangt und damit verhindert, dass sich das Rastelement 400 radial nach innen bewegen kann. Im entlasteten Zustand hingegen steht der Sperrabschnitt 22 nicht in Eingriff mit dem Rastelement 400, so dass durch Aufbringen einer Zugkraft FA auf das Betätigungselement 4 das Betätigungselement 4 zusammen mit dem zweiten Verschlussteil 2 aus der Aussparung 31 des ersten Verschlussteils 3 entfernt werden kann, wobei hierzu die Magnetkraft FM zwischen den Magneten 25, 35 zu überwinden ist.

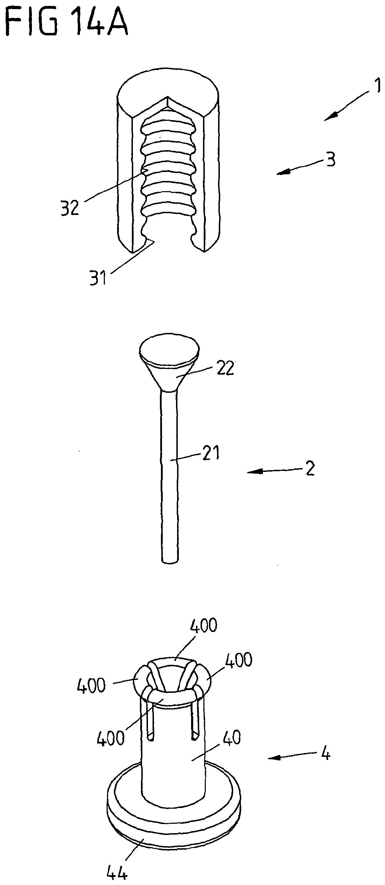

Eine weitere Ausführungsform einer Verschlussvorrichtung 1 ist in Fig. 14A bis 14D dargestellt, bei der am ersten Verschlussteil 3 in einer Aussparung 31 mehrere axial zueinander versetzte Rastabschnitte 32 vorgesehen sind, die sich jeweils umfänglich in Form von ringförmigen Vertiefungen um die Aussparung 31 erstrecken.

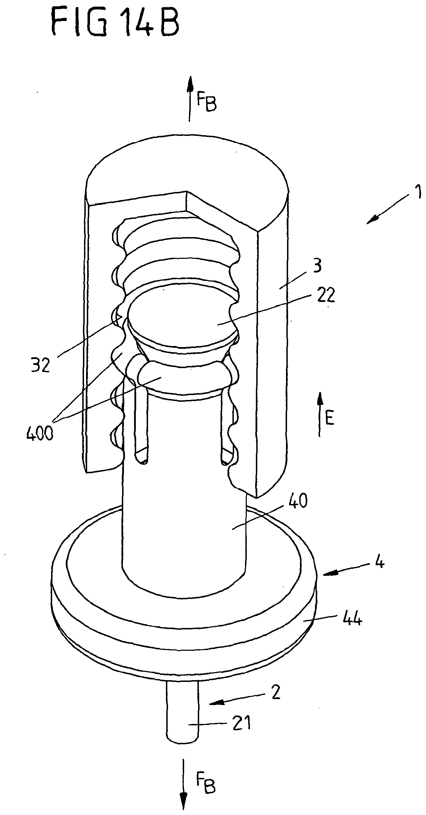

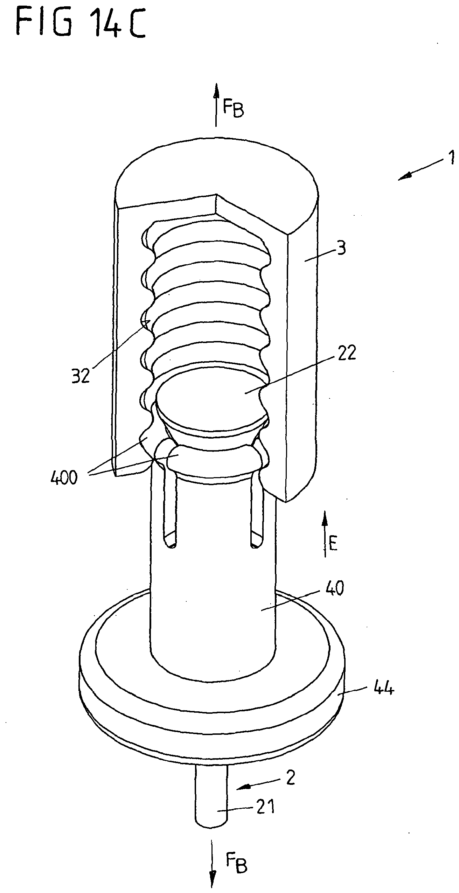

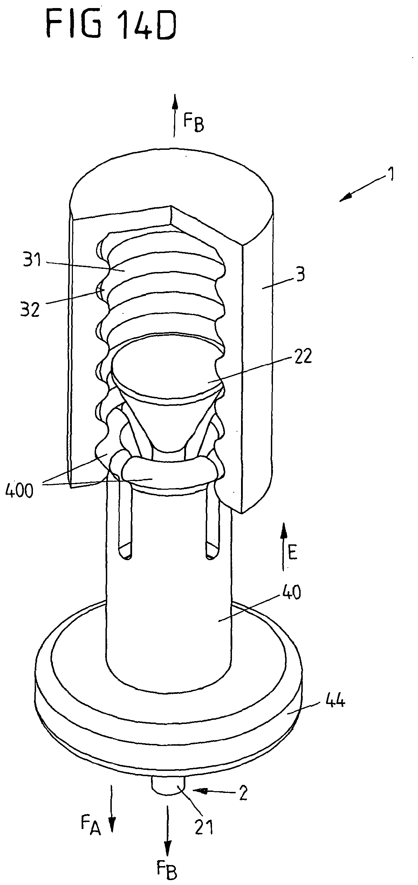

Fig. 14A zeigt die Verschlussvorrichtung 1 in einer Explosionsdarstellung, Fig. 14B in einem ersten Schließzustand in belastetem Zustand, Fig. 14C in einem zweiten Schließzustand in belastetem Zustand und Fig. 14D in dem zweiten Schließzustand, jedoch in entlastetem Zustand.

Dadurch, dass mehrere axial zueinander versetzte Rastabschnitte 32 in der Aussparung 31 vorgesehen sind, kann die Verschlussvorrichtung 1 gemäß Fig. 14A bis 14D mehrere Schließzustände einnehmen. Die Schließzustände unterscheiden sich hierbei durch die axiale Position des Betätigungselements 4 in der Aussparung 31, wobei in jedem Schließzustand die Rastelemente 400 am Betätigungselement 4 mit einem Rastabschnitt 32 an der Aussparung 31 des ersten Verschlussteils 3 verrastet sind.

Wiederum ist die Verschlussvorrichtung 1 bei Belastung gesperrt, indem der Sperrabschnitt 32, der bei dieser Ausführungsform konisch ausgebildet ist, entgegen der Befestigungsrichtung E rückseitig auf die Rastelemente 400 aufläuft und diese in dem jeweiligen Schließzustand am ersten Verschlussteil 3 derart sperrt, dass sie nicht radial nach innen gedrückt werden können und damit nicht außer Eingriff mit dem jeweiligen Rastabschnitt 32 gelangen können.

Ist die Verschlussvorrichtung 1 entlastet, so kann der Sperrabschnitt 22 eine entsperrte Position einnehmen, wie in Fig. 14D dargestellt. In dieser Position des Sperrabschnitts 22 können die Rastelemente 400 radial nach innen gebogen werden, so dass durch Aufbringen einer Zugkraft FA auf das Betätigungselement 4 entgegen der Befestigungsrichtung E das Betätigungselement 4 aus der Aussparung 31 gezogen werden kann. Durch die abgerundete Ausbildung der Rastabschnitte 32 und der Rastelemente 400 werden in dem entlasteten Zustand die Rastelemente 400 nicht formschlüssig an den ersten Verschlussteil 3 gehalten.

Die Ausführungsform gemäß Fig. 14A bis 14D eignet sich insbesondere für Verschlussvorrichtungen, bei denen gleichzeitig auch eine Längeneinstellung vorgenommen werden soll, um beispielsweise die Längsposition zweier Gurte zueinander anzupassen.

In Abwandlung der Ausführungsform gemäß Fig. 14A bis 14D kann auf die beschriebene Weise auch eine reine Längeneinstellungsvorrichtung ausgebildet werden, bei der durch Verschieben des Betätigungselements 4 innerhalb des ersten Verschlussteils 3 die axiale Position zweier Teile 2, 3 relativ zueinander angepasst werden kann. Unter Belastung ist diese Längseinstellungsvorrichtung dann gesperrt, in entlastetem Zustand hingegen in der Längsposition einstellbar.

Beispielsweise ist eine Vorrichtung dieser Art einsetzbar, um die Länge eines Skistocks einzustellen. Eine Hälfte des Skistocks ist dann mit dem ersten Verschlussteil 3 und eine zweite Hälfte mit dem zweiten Verschlussteil 2 verbunden, wobei in entlastetem Zustand durch Verschieben des Betätigungselements 4 in der Aussparung 31 des ersten Verschlussteils 3 die Länge des Skistocks eingestellt werden kann. Im belasteten Zustand ist die Längseinstellungsvorrichtung hingegen durch Anlage des Sperrabschnitts 22 an den Rastelementen 400 gesperrt.

Bei dieser Ausgestaltung ist vorteilhafterweise der Sperrabschnitt 22 in den gesperrten Zustand vorgespannt, so dass nach einer Verstellung die Längseinstellungsvorrichtung automatisch sperrt und der Skistock sich nicht selbsttätig verstellen kann.

Bei den vorangehend beschriebenen Ausführungsformen kann durch Verwenden eines Doppelkonus (Doppelkegel) und entsprechende beidseitige Auflaufschrägen rückseitig der Rastelemente 400 auch eine Sperrung bei Belastung der Verschlussvorrichtung 1 auf Zug und auf Druck erreicht werden, wobei bei einer Belastung auf Zug eine der Konushälften entgegen der Befestigungsrichtung auf eine zugeordnete Auflaufschräge rückseitig der Rastelemente 400 aufläuft und bei einer Belastung auf Druck die andere Konushälfte in die Befestigungsrichtung E auf eine andere Auflaufschräge rückseitig der Rastelemente 400 aufläuft und damit die Rastelemente 400 sperrt.

Bei Ausbildung einer Verschlussvorrichtung zur Aufnahme von Druckkräften in die Befestigungsrichtung E können die Ausrichtung des Konus und der zugeordneten Auflaufschrägen bei den vorangehenden Ausführungsformen einfach umgekehrt werden. Bei sämtlichen dargestellten Ausführungsformen sind die einzelnen Teile der Verschlussvorrichtung 1 vorteilhafterweise aus Kunststoff, beispielsweise als Kunststoffspritzteile, hergestellt.

Der der Erfindung zugrunde liegende Gedanke ist nicht auf die vorangehend geschilderten Ausführungsbeispiele beschränkt, sondern lässt sich grundsätzlich auch bei gänzlich anders gearteten Ausführungsformen verwirklichen. Insbesondere können die einzelnen Bauteile, z. B. das erste Verschlussteil, das zweite Verschlussteil und das Betätigungselement, auch gänzlich anders geformt sein und in anderer Weise aneinander angeordnet sein.

Beispielsweise dadurch, dass das zweite Verschlussteil 2 am Betätigungselement 4 beweglich ist, eröffnen sich über die genannten Anwendungen hinaus auch eine Vielzahl von weiteren Anwendungen, z.B. das Klemmen eines Gurtbandes in einer Längenverstellung im gesperrten, belasteten Zustand bei Freigabe im entsperrten, unbelasteten Zustand.

Verschlussvorrichtungen der hier beschriebenen Art können überall dort eingesetzt werden, wo zwei Teile lösbar miteinander verbunden werden sollen. Beispielsweise eignet sich eine derartige Verschlussvorrichtung als Verschluss für eine Tasche oder einen anderen Behälter, als Haltevorrichtung oder als Verbindungsvorrichtung zur Verbindung zweier auf Zug belasteter Elemente, beispielsweise zweier Zugseile oder Gurte. In konkreter Anwendung ist eine solche Verschlussvorrichtung beispielsweise zur Kopplung einer Leine mit einem Halsband für Haustiere einsetzbar.

Denkbar und vorteilhaft sind auch solche Anwendungen, bei denen die Verschlussvorrichtung unter Last nicht aufgehen darf, wie z.B. Schnallen für Babytragevorrichtungen, Verschlüsse für Rettungswesten oder dergleichen.

### Bezugszeichenliste

- 1, 1': Verschlussvorrichtung
- 2: Verschlussteil
- 21: Stangenförmiger Abschnitt
- 22, 22', 22": Sperrabschnitt
- 220: Auflaufschrägen
- 23: Verbindungsbügel
- 24: Kopf
- 25: Magnet
- 3: Verschlussteil
- 303,304: Magnet
- 31: Aussparung
- 32: Rastöffnung
- 320: Randabschnitt
- 33: Verbindungsbügel
- 34: Stützstelle
- 35: Magnet
- 4: Betätigungselement
- 40: Abschnitt
- 400: Rastelement
- 401: Schräge
- 402: Aussparung
- 403,404: Magnet
- 405: Aufnahmen
- 406: Feder
- 41: Führungsöffnung
- 42: Auflaufschräge
- 42': Aufnahmeabschnitt
- 43: Führungsöffnung
- 44: Kopf
- 440: Schrauben
- 441: Bohrungen
- 442: Aufnahmen
- 45: Punktlager
- 46: Magnet
- D: Verdrehrichtung
- E: Befestigungsrichtung
- FA: Zugkraft
- FB: Zugkraft
- FD: Druckkraft
- FM: Magnetkraft

## Patentansprüche

1. Verschlussvorrichtung, mit
- einem ersten Verschlussteil,
- einem zweiten Verschlussteil, das in eine Befestigungsrichtung an dem ersten Verschlussteil anordbar und in einem Schließzustand mit dem ersten Verschlussteil verbunden ist, und
- einem Betätigungselement, an dem das zweite Verschlussteil beweglich angeordnet ist,
wobei in dem Schließzustand das zweite Verschlussteil über das Betätigungselement an dem ersten Verschlussteil gehalten ist und dazu das zweite Verschlussteil derart mit dem Betätigungselement zusammenwirkt, dass in einem belasteten Zustand bei einer auf das zweite Verschlussteil relativ zum ersten Verschlussteil entlang der Befestigungsrichtung wirkenden Kraft das Betätigungselement fest mit dem ersten Verschlussteil verbunden ist und das zweite Verschlussteil an dem ersten Verschlussteil hält, in einem entlasteten Zustand hingegen das zweite Verschlussteil durch Betätigung des Betätigungselementes von dem ersten Verschlussteil lösbar ist,
mit magnetischen Mitteln (25, 35, 46; 303, 304, 403, 404) zum Erzeugen einer Anziehungskraft (FM) zwischen dem ersten Verschlussteil (3) einerseits und dem Betätigungselement (4) und/oder dem zweiten Verschlussteil (2) andererseits, um das Überführen der Verschlussvorrichtung (1, 1') in den Schließzustand zu unterstützen,
**dadurch gekennzeichnet, dass**
- in dem Schließzustand in dem belasteten Zustand das Betätigungselement (4) reibschlüssig durch Haftreibung an dem ersten Verschlussteil (3) gehalten ist oder
- das Betätigungselement (4) in dem Schließzustand rastend an dem ersten Verschlussteil (3) gehalten ist, wobei die Rastverbindung zwischen dem Betätigungselement (4) und dem ersten Verschlussteil (3) in dem belasteten Zustand des zweiten Verschlussteils (2) gesperrt, in dem entlasteten Zustand des zweiten Verschlussteils (2) hingegen lösbar ist.

2. Verschlussvorrichtung nach Anspruch 1, **dadurch gekennzeichnet, dass** zum Ausbilden der magnetischen Mittel (25, 35, 46; 303, 304, 403, 404)
- an dem ersten Verschlussteil (3) und dem Betätigungselement (4) oder
- an dem ersten Verschlussteil (3) und dem zweiten Verschlussteil (2) jeweils ein Magnet (25, 35, 46; 303, 304, 403, 404) oder einerseits ein Magnet (25, 35, 46; 303, 304, 403, 404) und andererseits ein Anker aus einem ferromagnetischen Werkstoff angeordnet ist.

3. Verschlussvorrichtung nach Anspruch 1 oder 2, **dadurch gekennzeichnet, dass** das Betätigungselement (4) zum Herstellen des Schließzustands zusammen mit dem zweiten Verschlussteil (2) in die Befestigungsrichtung (E) in eine Aussparung (31) des ersten Verschlussteils (3) einsteckbar und zum Lösen entgegen der Einsteckrichtung (E) aus der Aussparung (31) entnehmbar ist.

4. Verschlussvorrichtung nach einem der vorangehenden Ansprüche, **dadurch gekennzeichnet, dass** das zweite Verschlussteil (2) entlang der Befestigungsrichtung (E) verschieblich an dem Betätigungselement (4) angeordnet ist.

5. Verschlussvorrichtung nach einem der vorangehenden Ansprüche, **dadurch gekennzeichnet, dass** das Betätigungselement (4) zum Lösen der Verbindung relativ zum ersten Verschlussteil (3) verdrehbar oder verschiebbar ist, um die durch die magnetischen Mittel (25, 35, 46; 303, 304, 403, 404) erzeugte magnetische Anziehungskraft (FM) zum Öffnen der Verschlussvorrichtung (1, 1') abzuschwächen.

6. Verschlussvorrichtung nach einem der vorangehenden Ansprüche 1 bis 5, **dadurch gekennzeichnet, dass** das zweite Verschlussteil (2) einen Sperrabschnitt (22) mit mindestens einer Auflaufschräge (220) aufweist, die bei einer auf das zweite Verschlussteil (2) relativ zum ersten Verschlussteil (3) entlang der Befestigungsrichtung (E) wirkenden Kraft (FB) auf eine Auflaufschräge (42) an einem Abschnitt (40) des Betätigungselements (4) aufläuft, so dass der Sperrabschnitt (22) den Abschnitt (40) des Betätigungselements (4) reibschlüssig mit dem ersten Verschlussteil (3) verbindet.

7. Verschlussvorrichtung nach Anspruch 6, **dadurch gekennzeichnet, dass** das zweite Verschlussteil (2) einen Sperrabschnitt (22") aufweist, der das zweite Verschlussteil (2) und das Betätigungselement (4) derart miteinander verbindet, dass bei einer auf das zweite Verschlussteil (2) wirkenden Kraft (FB) der Sperrabschnitt (22") auf einen Abschnitt (40) des Betätigungselements (4) einwirkt, so dass der Sperrabschnitt (22") den Abschnitt (40) des Betätigungselements (4) reibschlüssig mit dem ersten Verschlussteil (3) verbindet.

8. Verschlussvorrichtung nach einem der Ansprüche 1 bis 7, **dadurch gekennzeichnet, dass** in dem entlasteten Zustand das Betätigungselement (4)
- durch Haftreibung an dem ersten Verschlussteil (3) gehalten ist oder
- durch die magnetischen Mittel (25, 35, 46; 303, 304, 403, 404) an dem ersten Verschlussteil (3) gehalten ist.

9. Verschlussvorrichtung nach einem der Ansprüche 1 bis 5, **dadurch gekennzeichnet, dass** das Betätigungselement (4) mindestens ein Rastelement (400) aufweist, das in dem Schließzustand formschlüssig mit einem Rastabschnitt (32) des ersten Verschlussteils (3) in Eingriff steht.

10. Verschlussvorrichtung nach Anspruch 9, **dadurch gekennzeichnet, dass** das zweite Verschlussteil (2) einen Sperrabschnitt (22, 22', 22") aufweist, der in dem belasteten Zustand bei einer auf das zweite Verschlussteil (2) wirkenden Kraft (FB) mit dem mindestens einen Rastelement (400) des Betätigungselementes (4) zum Sperren der rastenden Verbindung des Betätigungselementes (4) mit dem ersten Verschlussteil (3) zusammenwirkt.

11. Verschlussvorrichtung nach Anspruch 10, **dadurch gekennzeichnet, dass**
- der Sperrabschnitt (22, 22') mindestens eine Auflaufschräge (220) aufweist, die bei einer auf das zweite Verschlussteil (2) wirkenden Kraft (FB) auf eine Auflaufschräge (42) des mindestens einen Rastelementes (400) derart aufläuft, dass das mindestens eine Rastelement (400) nicht von dem Rastabschnitt (32) lösbar ist, oder
- der Sperrabschnitt (22, 22') bei einer auf das zweite Verschlussteil (2) wirkenden Kraft (FB) mit einem Aufnahmeabschnitt (42') des mindestens einen Rastelementes (400) derart in Eingriff gelangt, dass das mindestens eine Rastelement (400) nicht von dem Rastabschnitt (32) lösbar ist, oder
- der Sperrabschnitt (22") das zweite Verschlussteil (2) und das Betätigungselement (4) derart miteinander verbindet, dass bei einer auf das zweite Verschlussteil (2) wirkenden Kraft (FB) der Sperrabschnitt (22") derart auf einen Abschnitt (40) des Betätigungselements (4) einwirkt, dass das mindestens eine Rastelement (400) nicht von dem Rastabschnitt (32) lösbar ist.

12. Verschlussvorrichtung nach einem der Ansprüche 9 bis 11, **dadurch gekennzeichnet, dass** in dem entlasteten Zustand die formschlüssige Verbindung zwischen dem mindestens einen Rastelement (400) des Betätigungselementes (4) und dem Rastabschnitt (32) des ersten Verschlussteils (3)
- durch Aufbringen einer Druckkraft (FD) auf das mindestens eine Rastelement (400) und Entfernen des mindestens einen Rastelementes (400) von dem Rastabschnitt (32) oder
- durch Aufbringen einer Zugkraft (FA) auf das Betätigungselement (4) relativ zum ersten Verschlussteil (3) oder
- durch Verdrehen des Betätigungselements (4) relativ zum ersten Verschlussteil (3) um die Befestigungsrichtung (E) oder durch Verschieben des Betätigungselements (4) relativ zum ersten Verschlussteil (3) quer zur Befestigungsrichtung (E)
lösbar ist.

13. Verschlussvorrichtung nach einem der vorangehenden Ansprüche, **gekennzeichnet durch** Rückstellmittel zum Überführen des zweiten Verschlussteils (2) entweder in eine entsperrte Position relativ zu dem Betätigungselement (4) in dem entlasteten Zustand oder in eine gesperrte Position relativ zu dem Betätigungselement (4).

14. Verschlussvorrichtung nach Anspruch 13, **dadurch gekennzeichnet, dass** die Rückstellmittel mechanisch durch eine Feder oder magnetisch ausgebildet sind.

15. Verschlussvorrichtung nach Anspruch 13 oder 14, **dadurch gekennzeichnet, dass** die magnetischen Mittel (25, 35, 46; 303, 304, 403, 404) zum Erzeugen einer Anziehungskraft (FM) zwischen dem ersten Verschlussteil (3) einerseits und dem Betätigungselement (4) und/oder dem zweiten Verschlussteil (2) andererseits gleichzeitig als Rückstellmittel zum Überführen des zweiten Verschlussteils (2) in die entsperrte Position wirken.

## Claims

1. Lock device, having
- a first lock part,
- a second lock part, which can in a fastening direction be arranged on the first lock part and is connected to the first lock part in a closing state, and
- an actuating element, on which the second lock part is movably arranged, wherein in the closing state the second lock part is held on the first lock part via the actuating element and, moreover, the second lock part acts together with the actuating element in such a way that in a loaded state, when a force is acting on the second lock part relative to the first lock part along the fastening direction, the actuating element is rigidly connected to the first lock part and holds the second lock part on the first lock part, whereas in an unloaded state the second lock part can be detached from the first lock part by actuation of the actuating element,
- having magnetic means (25, 35, 46; 303, 304, 403, 404) to generate a magnetic attracting force (FM) between the first lock part (3) on the one hand and the actuating element (4) and/or the second lock part (2) on the other hand, to support the transfer of the lock device (1, 1') into the closing state
**characterized in that**
- in the closing state in the loaded state the actuating element (4) is held friction-locking by static friction on the first lock part (3)
or
- the actuating element (4) in the closing state is held catch-lockingly on the first lock part (3), wherein the catch locking connection between actuating element (4) and the first lock part (3) in the loaded state of the second lock part (2) is blocked, whereas in the unloaded state of the second lock part (2) it can be released.

2. Lock device according to claim 1, **characterized in that** to form the magnetic means (25,35,46;303,304,403,404)
- on each the first lock part (3) and the actuating element (4) or
- on each the first lock part (3) and the second lock part (2)
respectively, one magnet (25, 35, 46; 303, 304, 403, 404) or on the one hand a magnet (25, 35, 46; 303, 304, 403, 404) and on the other hand an anchor made of a ferromagnetic material is arranged.

3. Lock device according to claim 1 or 2, **characterized in that** the actuating element (4) can in the fastening direction (E) be inserted together with the second lock part (2) into a recess (31) of the first lock part (3) to establish the closing state and, to release, can be taken out from the recess (31) counter to the insertion direction (E).

4. Lock device according to any of the preceding claims, **characterized in that** the second lock part (2) is arranged shiftably along the fastening direction (E) on the actuating element (4).

5. Lock device according to any of the preceding claims, **characterized in that** the actuating element (4) to release the connection can be turned or shifted relative to the first lock part (3), to weaken the magnetic attracting force (FM), generated by the magnetic means (25, 35, 46; 303, 304, 403, 404), to open the lock device (1, 1').

6. Lock device according to any of the preceding claims 1 to 5, **characterized in that** the second lock part (2) has a blocking section (22) with at least one run-up slope (220), which, when a force (FB) is acting on the second lock part (2) relative to the first lock part (3) along the fastening direction (E), runs up onto a run-up slope (42) on a section (40) of the actuating element (4), so that the blocking section (22) connects the section (40) of the actuating element (4) to the first lock part (3) by friction.

7. Lock device according to claim 6, **characterized in that** the second lock part (2) has a blocking section (22"), which connects the second lock part (2) and the actuating element (4) to each other in such a way that, when a force (FB) is acting on the second lock part (2), the blocking section (22") acts onto a section (40) of the actuating element (4), so that the blocking section (22") connects the section (40) of the actuating element (4) to the first lock part (3) by friction.

8. Lock device according to any of claims 1 to 7, **characterized in that** in the unloaded state the actuating element (4)
- is held on the first lock part (3) by static friction or
- is held on the first lock part (3) by the magnetic means (25, 35, 46; 303, 304, 403, 404).

9. Lock device according to any of claims 1 to 5, **characterized in that** the actuating element (4) has at least one catch locking element (400), which in the closing state engages positive-locking with a catch section (32) of the first lock part (3).

10. Lock device according to claim 9, **characterized in that** the second lock part (2) has a blocking section (22, 22', 22"), which in the loaded state, when a force (FB) is acting on the second lock part (2), acts together with the at least one catch locking element (400) of the actuating element (4) to block the catch-locking connection of the actuating element (4) to the first lock part (3).

11. Lock device according to claim 10, **characterized in that**
- the blocking section (22, 22') has at least one run-up slope (220), which, when a force (FB) is acting on the second lock part (2), runs up onto a run-up slope (42) of the at least one catch locking element (400) in such a way that the least one catch locking element (400) cannot be detached from the catch section (32), or
- the blocking section (22, 22'), when a force (FB) is acting on the second lock part (2), comes into engagement with a housing section (42') of the at least one catch locking element (400) in such a way that the at least one catch locking element (400) cannot be detached from the catch section (32), or
- the blocking section (22") connects the second lock part (2) and the actuating element (4) to each other in such a way that when a force (FB) is acting on the second lock part (2) the blocking section (22") acts onto a section (40) of the actuating element (4) in such a way that the at least one catch locking element (400) cannot be detached from the catch section (32).

12. Lock device according to any of claims 9 to 11, **characterized in that** in the unloaded state the positive-locking connection between the at least one catch locking element (400) of the actuating element (4) and the catch section (32) of the first lock part (3) can be released
- by applying a compressive force (FD) onto the at least one catch locking element (400) and removing the at least one catch locking element (400) from the catch section (32) or
- by applying a tensile force (FA) onto the actuating element (4) relative to the first lock part (3) or
- by turning the actuating element (4) relative to the first lock part (3) around the fastening direction (E) or by shifting the actuating element (4) relative to the first lock part (3) transverse to the fastening direction (E).

13. Lock device according to any of the preceding claims, **characterized by** restoring means to transfer the second lock part (2) either into an unblocked position relative to the actuating element (4) in the unloaded state or into a blocked position relative to the actuating element (4).

14. Lock device according to claim 13, **characterized in that** the restoring means are formed mechanically by a spring or magnetically.

15. Lock device according to claim 13 or 14, **characterized in that** the magnetic means (25, 35, 46; 303, 304, 403, 404) to generate a magnetic attracting force (FM) between the first lock part (3) on the one hand and the actuating element (4) and/or the second lock part (2) on the other hand act at the same time as restoring means to transfer the second lock part (2) into the unblocked position.

## Revendications

1. Dispositif de fermeture avec
- une première partie de fermeture,
- une deuxième partie de fermeture qui peut être disposée dans un dispositif de fixation sur la première partie de fermeture et est reliée, dans un état de fermeture, avec la première partie de fermeture, et
- un élément d'actionnement, sur lequel la deuxième partie de fermeture est disposée de manière mobile,
la deuxième partie de fermeture étant maintenue, dans l'état de fermeture, par l'intermédiaire de l'élément d'actionnement, contre la première partie de fermeture et pour cela la deuxième partie de fermeture interagit avec l'élément d'actionnement de façon à ce que, dans un état chargé, lorsqu'une force agit sur la deuxième partie de fermeture par rapport à la première partie de fermeture le long du dispositif de fixation, l'élément d'actionnement est relié fermement avec la première partie de fermeture et maintient la deuxième partie de fermeture contre la première partie de fermeture, dans un état déchargé en revanche la deuxième partie de fermeture peut être détachée de la première partie de fermeture par l'actionnement de l'élément d'actionnement, avec des moyens magnétiques (25, 35, 46 ; 303, 304, 403, 404) pour la production d'une force d'attraction (FM) entre la première partie de fermeture (3) d'une part et l'élément d'actionnement (4) et/ou la deuxième partie de fermeture (2) d'autre part, afin de soutenir le placement du dispositif de fermeture (1, 1') dans l'état de fermeture,
**caractérisé en ce que**
- dans l'état de fermeture, dans l'état chargé, l'élément d'actionnement (4) est maintenu par friction contre la première partie de fermeture (3) ou
- l'élément d'actionnement (4) est maintenu, dans l'état de fermeture, encliqueté contre la première partie de fermeture (3), la liaison par encliquetage entre l'élément d'actionnement (4) et la première partie de fermeture (3) dans l'état chargé de la deuxième partie de fermeture (2) étant bloquée, la liaison par encliquetage étant en revanche détachable dans l'état déchargé de la deuxième partie de fermeture (2).

2. Dispositif de fermeture selon la revendication 1, **caractérisé en ce que**, pour la réalisation des moyens magnétiques (25, 35, 46 ; 303, 304, 403, 404)
- sur la première partie de fermeture (3) et l'élément d'actionnement (4) ou
- sur la première partie de fermeture (3) et la deuxième partie de fermeture (2) un aimant (25, 35, 46 ; 303, 304, 403, 404) ou d'une part un aimant (25, 35, 46 ; 303, 304, 403, 404) et d'autre part un dispositif d'ancrage constitué d'un matériau ferromagnétique est disposé.

3. Dispositif de fermeture selon la revendication 1 ou 2, **caractérisé en ce que** l'élément d'actionnement (4) peut être enfiché, pour l'établissement de l'état de fermeture, ensemble avec la deuxième partie de fermeture (2), dans le dispositif de fixation (E) dans un évidement (31) de la première partie de fermeture (3) et pour le détacher, il peut être retiré de l'évidement (31) à l'encontre de la direction d'enfichage (E).

4. Dispositif de fermeture selon l'une des revendications précédentes, **caractérisé en ce que** la deuxième partie de fermeture (2) est disposée le long du dispositif de fixation (E) de manière coulissante le long de l'élément d'actionnement (4).

5. Dispositif de fermeture selon l'une des revendications précédentes, **caractérisé en ce que** l'élément d'actionnement (4) pour être tourné ou coulissé pour le détachement de la liaison par rapport à la première partie de fermeture (3), afin d'affaiblir la force d'attraction magnétique (FM) générée par les moyens magnétiques (25, 35, 46 ; 303, 304, 403, 404) pour l'ouverture du dispositif de fermeture (1, 1').

6. Dispositif de fermeture selon l'une des revendications précédentes 1 à 5, **caractérisé en ce que** la deuxième partie de fermeture (2) comprend une portion de blocage (22) avec au moins un chanfrein d'entrée (220) qui, lorsqu'une force (FB) agit sur la deuxième partie de fermeture (2) par rapport à la première partie de fermeture (3) le long du dispositif de fixation (E), se déplace vers un chanfrein d'entrée (42) sur une portion (40) de l'élément d'actionnement (4), de façon à ce que la portion de blocage (22) relie par friction la portion (40) de l'élément d'actionnement (4) avec la première partie de fermeture (3).

7. Dispositif de fermeture selon la revendication 6, **caractérisé en ce que** la deuxième partie de fermeture (2) comprend une portion de blocage (22") qui relie la deuxième partie de fermeture (2) et l'élément d'actionnement (4) entre eux de façon à ce que, lorsqu'une force (FB) agit sur la deuxième partie de fermeture (2), la portion de blocage (22") agit sur une portion (40) de l'élément d'actionnement (4), de façon à ce que la portion de blocage (22") relie par friction la portion (40) de l'élément d'actionnement (4) avec la première partie de fermeture (3).

8. Dispositif de fermeture selon l'une des revendications 1 à 7, **caractérisé en ce que**, dans l'état déchargé, l'élément d'actionnement (4)
- est maintenu par friction contre la première partie de fermeture (3) ou
- est maintenu par les moyens magnétiques (25, 35, 46 ; 303, 304, 403, 404) contre la première partie de fermeture (3).

9. Dispositif de fermeture selon l'une des revendications 1 à 5, **caractérisé en ce que** l'élément d'actionnement (4) comprend au moins un élément d'encliquetage (400) qui, dans l'état de fermeture, s'emboîte par complémentarité de forme avec une portion d'encliquetage (32) de la première partie de fermeture (3).

10. Dispositif de fermeture selon la revendication 9, **caractérisé en ce que** la deuxième partie de fermeture (2) comprend une portion de blocage (22, 22', 22") qui, dans un état chargé, lorsqu'une force (FB) agit sur la deuxième partie de fermeture (2), interagit avec l'au moins un élément d'encliquetage (400) de l'élément d'actionnement (4) pour le blocage de la liaison par encliquetage de l'élément d'actionnement (4) avec la première partie de fermeture (3).

11. Dispositif de fermeture selon la revendication 10, **caractérisé en ce que**
- la portion de blocage (22, 22') comprend au moins un chanfrein d'entrée (220) qui, lorsqu'une force (FB) agit sur la deuxième partie de fermeture (2), se déplace vers un chanfrein d'entrée (42) de l'au moins un élément d'encliquetage (400) de façon à ce que l'au moins un élément d'encliquetage (400) ne puisse pas être détaché de la portion d'encliquetage (32) ou
- la portion de blocage (22, 22') s'emboîte, lorsqu'une force (FB) agit sur la deuxième partie de fermeture (2), avec une portion de logement (42') de l'au moins un élément d'encliquetage (400) de façon à ce que l'au moins un élément d'encliquetage (400) ne puisse pas être détaché de la portion d'encliquetage (32) ou
- la portion de blocage (22") relie la deuxième partie de fermeture (2) et l'élément d'actionnement (4) entre eux de façon à ce que, lorsqu'une force (FB) agit sur la deuxième partie de fermeture (2), la portion de blocage (22") agisse sur une portion (40) de l'élément d'actionnement (4), de façon à ce que l'au moins un élément d'encliquetage (400) ne puisse pas être détaché de la portion d'encliquetage (32).

12. Dispositif de fermeture selon l'une des revendications 9 à 11, **caractérisé en ce que**, dans l'état déchargé, la liaison par complémentarité de forme entre l'au moins un élément d'encliquetage (400) de l'élément d'actionnement (4) et la portion d'encliquetage (32) de la première partie de fermeture (3) peut être détachée
- par l'application d'une force de pression (FD) sur l'au moins un élément d'encliquetage (400) pour le retrait de l'au moins un élément d'encliquetage (400) hors de la portion d'encliquetage (32) ou
- par l'application d'une force de traction (FA) sur l'élément d'actionnement (4) par rapport à la première partie de fermeture (3) ou
- pour la rotation de l'élément d'actionnement (4) par rapport à la première partie de fermeture (3) autour du dispositif de fixation (E) ou par déplacement de l'élément d'actionnement (4) par rapport à la première partie de fermeture (3) transversalement au dispositif de fixation (E).

13. Dispositif de fermeture selon l'une des revendications précédentes, **caractérisé par** des moyens de rappel pour le placement de la deuxième partie de fermeture (2) soit dans une position débloquée par rapport à l'élément d'actionnement (4) dans l'état déchargé soit dans une position bloquée par rapport à l'élément d'actionnement (4).

14. Dispositif de fermeture selon la revendication 13, **caractérisé en ce que** les moyens de rappel sont conçus de manière mécanique à l'aide d'un ressort ou de manière magnétique.

15. Dispositif de fermeture selon la revendication 13 ou 14, **caractérisé en ce que** les moyens magnétiques (25, 35, 46 ; 303, 304, 403, 404) pour la production d'une force d'attraction (FM) entre la première partie de fermeture (3) d'une part et l'élément d'actionnement (4) et/ou la deuxième partie de fermeture (2) d'autre part agissent simultanément en tant que moyens de rappel pour le placement de la deuxième partie de fermeture (2) dans la position débloquée.
